(19) **Europäisches Patentamt / European Patent Office / Office européen des brevets**

(11) **EP 4 360 350 B1**

(12) **EUROPEAN PATENT SPECIFICATION**

(45) Date of publication and mention
of the grant of the patent:
**26.11.2025 Bulletin 2025/48**

(21) Application number: **22724367.2**

(22) Date of filing: **02.05.2022**

(51) International Patent Classification (IPC):
**H04W 12/121** (2021.01) **H04W 4/02** (2018.01)
**H04L 9/40** (2022.01)

(52) Cooperative Patent Classification (CPC):
**H04W 12/121; H04L 63/1416; H04W 4/025**

(86) International application number:
**PCT/US2022/027303**

(87) International publication number:
**WO 2022/271275 (29.12.2022 Gazette 2022/52)**

(54) **METHODS AND APPARATUS FOR MAINTAINING TRANSMISSION INTEGRITY AND AUTHENTICITY THROUGH CHANNEL MEASUREMENTS AND REPORTING**

VERFAHREN UND VORRICHTUNG ZUR AUFRECHTERHALTUNG DER ÜBERTRAGUNGSINTEGRITÄT UND AUTHENTIZITÄT DURCH KANALMESSUNGEN UND -MELDUNG

PROCÉDÉS ET APPAREIL POUR MAINTENIR L'INTÉGRITÉ ET L'AUTHENTICITÉ D'UNE TRANSMISSION PAR L'INTERMÉDIAIRE DE MESURES ET DE RAPPORTS DE CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2021 GR 20210100415**

(43) Date of publication of application:
**01.05.2024 Bulletin 2024/18**

(73) Proprietor: **Qualcomm Incorporated**
**San Diego, CA 92121-1714 (US)**

(72) Inventors:
• **ELSHAFIE, Ahmed**
**San Diego, California 92121-1714 (US)**
• **MANOLAKOS, Alexandros**
**San Diego, California 92121-1714 (US)**
• **OPSHAUG, Guttorm Ringstad**
**San Diego, California 92121-1714 (US)**

(74) Representative: **Reddie & Grose LLP**
**The White Chapel Building**
**10 Whitechapel High Street**
**London E1 8QS (GB)**

(56) References cited:
**WO-A1-2021/094221      US-A1- 2021 185 536**

• **"3rd Generation Partnership Project; Technical Specification Group Services and System Aspects Study on 5G Security Enhancement against False Base Stations (FBS) (Release 17 )",** no. V0.15.0, 14 June 2021 (2021-06-14), pages 1 - 113, XP052030283, Retrieved from the Internet <URL:https://ftp.3gpp.org/Specs/archive/ 33_series/33.809/33809-0f0.zip 33809-0f0.docx> [retrieved on 20210614]

## Description

## BACKGROUND

Field:

The present disclosure relates generally to the field of wireless communications, and more specifically to authenticating channel connection between a user equipment (UE) and base station and identifying the presence of an unauthorized intervening device.

Information:

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems. A wireless multiple-access communications system may include a number of base stations, each simultaneously supporting communication for multiple communication devices, which may each be referred to as user equipments (UEs).

At times, a wireless communications system may be vulnerable to a variety of insecurities. In some instances, particularly when wireless information and/or location-based services are offered in public forums (e.g., a shopping mall, office building, etc.), potential security risks can arise given the possibility of malicious entities exploiting the network to gain unauthorized access to sensitive information. Such security risks may include "man in the middle", "spoofing and/or "phishing types of cyber-attacks. Such attacks may be based upon the malicious entity successfully masquerading as a legitimate entity by manipulating network protocols, falsifying credentials, and/or fooling a user to compromise network integrity for gaining illegitimate advantage. Additionally, UEs may relay data to other UEs in sidelink channels and coverage enhancement applications, which raise the prospect of man-in-the-middle and replay attacks. Accordingly, authentication of channel connections and the identification of the presence of attacking devices is desirable.

In WO 2021/094221 A1, a user equipment (UE) in a wireless communication network can receive a plurality of signals from a plurality of nodes. The UE can further determine a plurality of radio signal strength measurements. Each radio signal strength measurement can be associated with a signal of the plurality of signals received from the plurality of nodes. The UE can further determine whether there is an indication that a first node of the plurality of nodes may be an imposter node based on the plurality of radio signal strength measurements.

In US 2021/0185536 A1, techniques for detecting a potential false base station (FBS) are disclosed. A user equipment (UE) or a location server obtains a first location estimate of the UE based on a cellular network-based positioning procedure involving one or more cells, obtains a second location estimate of the UE based on a non-cellular network-based positioning procedure, determines whether or not a difference between the first location estimate and the second location estimate is greater than a distance threshold, and performs a mitigation operation based on the difference being greater than the distance threshold.

## SUMMARY

The connection between a user equipment (UE) and a base station may be authenticated, e.g., in the physical layer, and the presence of an unauthorized intervening device between the UE and the base station may be identified based on predicted measurement values of downlink reference signals and the actual measurement values for the current downlink reference signals. The predicted measurement values are produced based on previous measurements of downlink reference signals that are known to be received from the base station, e.g., after upper layer initial authentication. The predicted values comprise a predicted velocity of the UE. A difference between the predicted and actual measurement values, e.g., greater than a predetermined threshold, indicates that the previous reference signals used to generate the predicted measurement values and the current reference signals are not from the same entity, and thus, an intervening entity is likely present in the communication channel performing a man-in-the-middle or replay attack.

The invention is defined by the independent claims.

Features of some embodiment are recited in dependent claims.

## BRIEF DESCRIPTION OF THE FIGURES

Claimed subject matter is particularly pointed out and distinctly claimed in the concluding portion of the specification. However, both as to organization and/or method of operation, together with features and/or advantages thereof, it may best be understood by reference to the following detailed description if read with the accompanying drawings in which:

FIG. 1 is a diagram of an exemplary wireless communications system.

FIG. 2 illustrates an example wireless network structure.

FIG. 3 illustrates another example wireless network structure.

FIG. 4 shows a block diagram of a design of base station and UE, which may be one of the base stations and one of the UEs in FIG. 1.

FIG. 5 shows a structure of an exemplary subframe sequence with positioning reference signal (PRS) positioning occasions.

FIG. 6 illustrates a simplified environment and an exemplary technique for determining a position of a UE using distances from a plurality of base stations.

FIG. 7 illustrates a simplified environment and an exemplary technique for determining a position of a UE using Time Difference of Arrival (TDOA) techniques.

FIG. 8A illustrates a simplified environment and an exemplary technique for determining a position of a UE using Angle of Arrival (AoA) or Angle of Departure (AoD).

FIG. 8B illustrates a simplified environment and another exemplary technique for determining a position of a UE using AoA or AoD.

FIG. 9A illustrates an environment in which a replay attack or man-in-the-middle attack may be performed by an attacking device between a UE and a base station and identification of the attacking device.

FIG. 9B shows a graph illustrating a number of expected positioning measurement values and current positioning measurement values that may be compared to identify the presence of an attacking device.

FIG. 10 illustrates an example of predicted measurement values received for positioning measurements and predicted measurement values for security.

FIG. 11 is a message flow illustrating the messaging in a wireless network to authenticate a connection between a UE and a base station and identify the presence of an intervening device between the UE and the base station.

FIG. 12 shows a schematic block diagram illustrating certain exemplary features of a UE configured to support authentication of a connection with a base station and identification of the presence of an intervening device between the UE and a base station.

FIG. 13 shows a schematic block diagram illustrating certain exemplary features of a network entity configured to support authentication of a connection between a UE and a base station and identification of the presence of an intervening device between the UE and the base station.

FIG. 14 shows a flow diagram for an exemplary method performed by a UE for authenticating a connection with a base station.

FIG. 15 shows a flow diagram for an exemplary method performed by a network entity for authenticating a connection between a UE and a base station.

Like reference symbols in the various drawings indicate like elements, in accordance with certain example implementations. In addition, multiple instances of an element may be indicated by following a first number for the element with a letter or a hyphen and a second number. For example, multiple instances of an element 102 may be indicated as 102-1, 102-2, 102-3 etc. or as 102a, 102b, or 102c, etc. When referring to such an element using only the first number, any instance of the element is to be understood (e.g., element 102 in the previous example would refer to elements 102-1, 102-2, 102-3 or to elements 102a, 102b, or 102c).

It will be appreciated that the figures have not necessarily been drawn to scale, such as for simplicity and/or clarity of illustration. For example, dimensions of some aspects may be exaggerated relative to others. Further, it is to be understood that other embodiments may be utilized. Furthermore, structural and/or other changes may be made without departing from claimed subject matter. References throughout this specification to "claimed subject matter" refer to subject matter intended to be covered by one or more claims, or any portion thereof, and are not necessarily intended to refer to a complete claim set, to a particular combination of claim sets (e.g., method claims, apparatus claims, etc.), or to a particular claim. It should also be noted that directions and/or references, for example, such as up, down, top, bottom, and so on, may be used to facilitate discussion of drawings and are not intended to restrict application of claimed subject matter. Therefore, the following detailed description is not to be taken to limit claimed subject matter and/or equivalents.

## DETAILED DESCRIPTION

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "one or more processors configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, consumer tracking device for tracking consumer items, packages, assets, or entities such as individuals and pets, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," "mobile device," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNB), etc. In addition, in some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). A communication link through which UEs can send signals to other UEs is called a sidelink (SL) channel. As used herein the term traffic channel (TCH) can refer to either an UL / reverse or DL / forward traffic channel.

The term "base station" may refer to a single physical transmission reception point (TRP) or to multiple TRPs that may or may not be co-located. For example, where the term "base station" refers to a single physical TRP, the physical TRP may be an antenna of the base station corresponding to a cell of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference RF signals the UE is measuring.

To support positioning of a UE, two broad classes of location solution have been defined: control plane and user plane. With control plane (CP) location, signaling related to positioning and support of positioning may be carried over existing network (and UE) interfaces and using existing protocols dedicated to the transfer of signaling. With user plane (UP) location, signaling related to positioning and support of positioning may be carried as part of other data using such protocols as the Internet Protocol (IP), Transmission Control Protocol (TCP) and User Datagram Protocol (UDP).

The Third Generation Partnership Project (3GPP) has defined control plane location solutions for UEs that use radio access according to Global System for Mobile communications GSM (2G), Universal Mobile Telecommunications System (UMTS) (3G), LTE (4G) and New Radio (NR) for Fifth Generation (5G). These solutions are defined in 3GPP Technical Specifications (TSs) 23.271 and 23.273 (common parts), 43.059 (GSM access), 25.305 (UMTS access), 36.305 (LTE access) and 38.305 (NR access). The Open Mobile Alliance (OMA) has similarly defined a UP location solution known as Secure User Plane Location (SUPL) which can be used to locate a UE accessing any of a number of radio interfaces that support IP packet access such as General Packet Radio Service (GPRS) with GSM, GPRS with UMTS, or IP access with LTE or NR.

Both CP and UP location solutions may employ a location server (LS) to support positioning. The location server may be part of or accessible from a serving network or a home network for a UE or may simply be accessible over the Internet or over a local Intranet. If positioning of a UE is needed, a location server may instigate a session (e.g. a location session or a SUPL session) with the UE and coordinate location measurements by the UE and determination of an estimated location of the UE. During a location session, a location server may request positioning capabilities of the UE (or the UE may provide them to the location server without a request), may provide assistance data to the UE (e.g. if requested by the UE or in the absence of a request) and may request a location estimate or location measurements from a UE, e.g. for the Global Navigation Satellite System (GNSS), Time Difference Of Arrival (TDOA), Angle of Departure (AoD), Angle of Arrival (AoA), Round-Trip Time (RTT) and multi cell RTT (Multi -RTT), and/or Enhanced Cell ID (ECID) position methods. Assistance data may be used by a UE to acquire and measure GNSS and/or reference signals, such as positioning reference signals (PRS) signals (e.g. by providing expected characteristics of these signals such as frequency, expected time of arrival, signal coding, signal Doppler).

In a UE based mode of operation, assistance data may also or instead be used by a UE to help determine a location estimate from the resulting location measurements (e.g., if the assistance data provides satellite ephemeris data in the case of GNSS positioning or base station locations and other base station characteristics such as PRS timing in the case of terrestrial positioning using, e.g., TDOA, AoD, Multi-RTT, etc.).

In a UE assisted mode of operation, a UE may return location measurements to a location server which may determine an estimated location of the UE based on these measurements and possibly based also on other known or configured data (e.g. satellite ephemeris data for GNSS location or base station characteristics including base station locations and possibly PRS timing in the case of terrestrial positioning using , e.g., TDOA, AoD, Multi-RTT, etc.).

In another standalone mode of operation, a UE may make location related measurements without any positioning assistance data from a location server and may further compute a location or a change in location without any positioning assistance data from a location server. Position methods that may be used in a standalone mode include GPS and GNSS (e.g. if a UE obtains satellite orbital data from data broadcast by GPS and GNSS satellites themselves) as well as sensors.

In the case of 3GPP CP location, a location server may be an enhanced serving mobile location center (E-SMLC) in the case of LTE access, a standalone SMLC (SAS) in the case of UMTS access, a serving mobile location center (SMLC) in the case of GSM access, or a Location Management Function (LMF) in the case of 5G NR access. In the case of OMA SUPL location, a location server may be a SUPL Location Platform (SLP) which may act as any of: (i) a home SLP (H-SLP) if in or associated with the home network of a UE or if providing a permanent subscription to a UE for location services; (ii) a discovered SLP (D-SLP) if in or associated with some other (non-home) network or if not associated with any network; (iii) an Emergency SLP (E-SLP) if supporting location for an emergency call instigated by the UE; or (iv) a visited SLP (V-SLP) if in or associated with a serving network or a current local area for a UE.

A radio access network may employ reconfigurable intelligent surfaces (which may also be referred to as reconfigurable intelligent surfaces (RISs)) to increase a communications range of devices with minimal increase to an amount of power consumed by the radio access network. A reconfigurable surface may include an array of reflective elements that can be semi statically configured to change an angle of reflection of the reconfigurable surface - e.g., by adjusting reflection coefficients for the reflective elements.

A wireless communications system may be vulnerable to a variety of insecurities. In some instances, particularly when wireless information and/or location-based services are offered in public forums (e.g., a shopping mall, office building, etc.), potential security risks can arise given the possibility of malicious entities exploiting the network to gain unauthorized access to sensitive information. Such security risks may include "man in the middle", "spoofing and/or "phishing types of cyber-attacks. Such attacks may be based upon the malicious entity successfully masquerading as a legitimate entity by manipulating network protocols, falsifying credentials, and/or fooling a user to compromise network integrity for gaining illegitimate advantage.

For example, UEs may relay data to other UEs in sidelink channels and coverage enhancement applications. Relaying data between UEs raises concerns about man-in-the-middle and replay attacks. Such attacks, for example, may be undertaken if the physical layer is used for authentication of transmissions. Using channel characteristics and prediction techniques, e.g., for positioning measurements performed using downlink reference signals, such as positioning reference signals, and/or channel parameters, a UE may determine whether received downlink transmissions are most likely from an authentic transmitter.

In an implementation, a UE may authenticate a connection with a base station, such as a gNB in the physical layer and identify the presence of an unauthorized intervening device between the UE and the base station, based on predicted values for one or more measurements of the downlink reference signals, which are based on one or more previous measurements of downlink reference signals received from the base station. In accordance with the independent claims, the predicted values comprise a predicted velocity for the UE.. The UE may receive the predicted values for the one or more measurements from, e.g., a base station or a location server. The measurements are for a velocity of the UE. The measurements further may be positioning measurements such as, e.g., Reference Signal Received Power (RSRP) values, Reference Signal Time Difference (RSTD) values and/or uncertainties, Angle of Arrival (AoA) values and/or uncertainties, Angle of Departure values, and/or uncertainties, Round Trip Times (RTTs), etc. The measurements may further include predicted channel coefficients for the pairs of Tx-Rx antennas or antenna ports, and/or a predicted direction of travel for the UE. When a new downlink reference signal is received, the UE may determine if it is from the authentic transmitter or an attacking device by performing the one or more measurements on the downlink reference signal and comparing the measurement values for the current reference signals to the predicted values based on previous measurements. If the current measurement values do not match the predicted measurement values within a threshold, e.g., an acceptable error or uncertainty, the UE may determine that the current downlink reference signals are not from the same base station that transmitted the previous downlink reference signals used to generate the predicted measurement values, and thus, an unauthorized intervening device is likely present. The UE may report the detected presence of an intervening device as an active attack to a serving base station or location server.

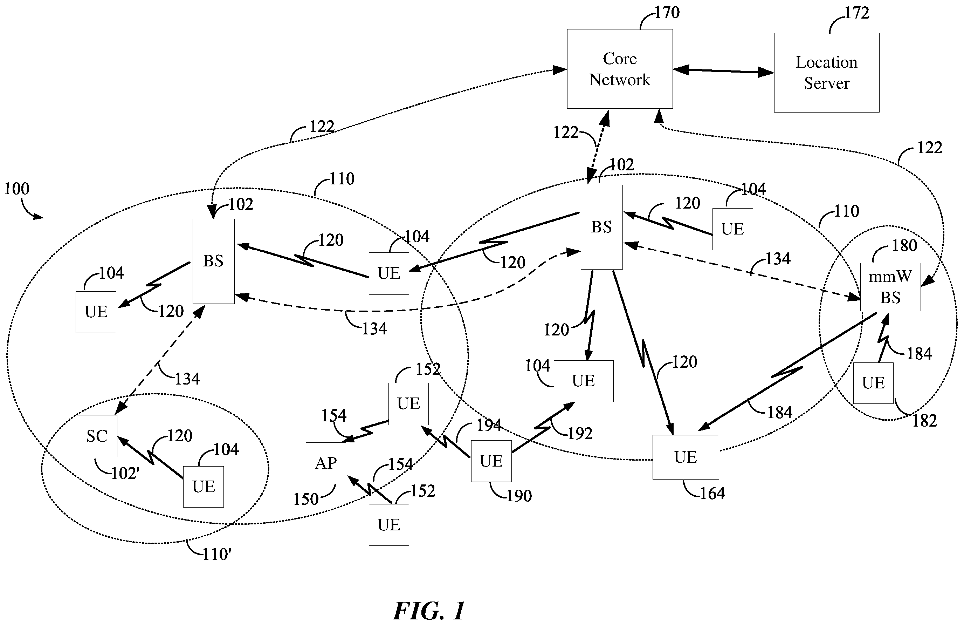

**FIG. 1** illustrates an exemplary wireless communications system 100 in which a UE 104 may authenticate a connection with a base station 102 in the physical layer and identify the presence of an unauthorized intervening devices, as discussed herein. The wireless communications system 100 (which may also be referred to as a wireless wide area network (WWAN)) may include various base stations 102, sometimes referred to herein as TRPs 102, and various UEs 104. The base stations 102 may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul links 122, and through the core network 170 to one or more location servers 172. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established

7

between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth®, and so on.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

Attacking device 112 may be performing a man-in-the-middle attack or relay attack. For example, attacking device 112 may receive signals from one or more base stations 102 and may relay the signals to UEs 104 via signals 114. The attacking device 112 may gain unauthorized access to sensitive information without knowledge of the UEs 104 or base stations 102 through the interception and relaying of the signals 120 to the UEs 104. Accordingly, the detection of the presence of the attacking device 112 by the UEs 104 and/or the base stations 102 is desirable so that remedial measures may be taken.

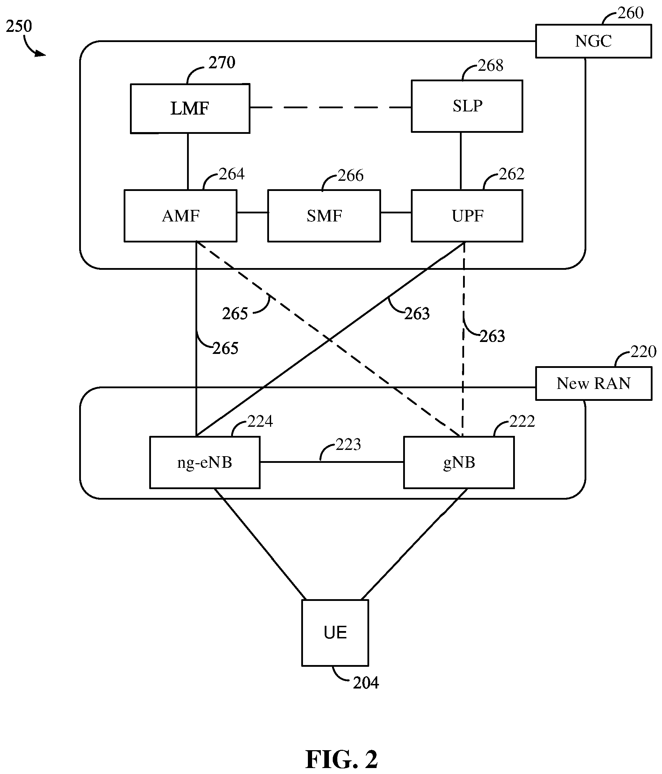

**FIG. 2** illustrates an example wireless network structure 200. For example, an NGC 210 (also referred to as a "5GC") can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the NGC 210 and specifically to the control plane functions 214 and user plane functions 212. In an additional configuration, an eNB 224 may also be connected to the NGC 210 via NG-C 215 to the control plane functions 214 and NG-U 213 to user plane functions 212. Further, eNB 224 may directly communicate with gNB 222 via a backhaul connection 223. In some configurations, the New RAN 220 may only have one or more gNBs 222, while other configurations include one or more of both eNBs 224 and gNBs 222. Either gNB 222 or eNB 224 may communicate with UEs 204 (e.g., any of the UEs depicted in FIG. 1). Another optional aspect may include one or more location servers 230a, 230b (sometimes collectively referred to as location server 230) (which may correspond to location server 172), which may be in communication with the control plane functions 214 and user plane functions 212, respectively, in the NGC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, NGC 210, and/or via the Internet (not illustrated). Further, the location server 230 may be integrated into a component of the core network, or alternatively may be external to the core network, e.g., in the New RAN 220.

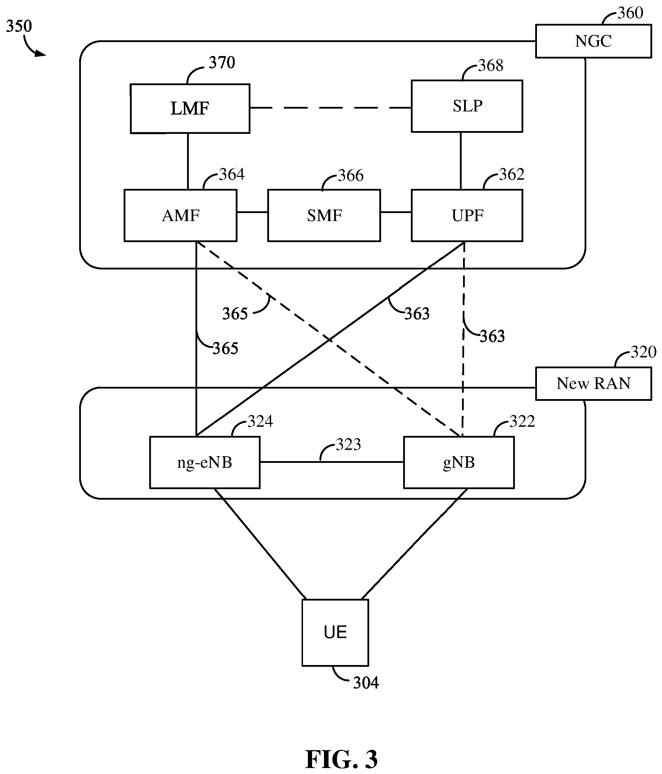

**FIG. 3** illustrates another example wireless network structure 350. For example, an NGC 360 (also referred to as a "5GC") can be viewed functionally as control plane functions, provided by an access and mobility management function (AMF) 364, user plane function (UPF) 362, a session management function (SMF) 366, SLP 368, and an LMF 370, which operate cooperatively to form the core network (i.e., NGC 360). User plane interface 363 and control plane interface 365 connect the ng-eNB 324 to the NGC 360 and specifically to UPF 362 and AMF 364, respectively. In an additional configuration, a gNB 322 may also be connected to the NGC 360 via control plane interface 365 to AMF 364 and user plane interface 363 to UPF 362. Further, eNB 324 may directly communicate with gNB 322 via the backhaul connection 323, with or without gNB direct connectivity to the NGC 360. In some configurations, the New RAN 320 may only have one or more gNBs 322, while other configurations include one or more of both ng-eNBs 324 and gNBs 322. Either gNB 322 or eNB 324 may communicate with UEs 304 (e.g., any of the UEs depicted in FIG. 1). The base stations of the New RAN 320 communicate with the AMF 364 over the N2 interface and the UPF 362 over the N3 interface.

The functions of the AMF include registration management, connection management, reachability management, mobility management, lawful interception, transport for session management (SM) messages between the UE 304 and the SMF 366, transparent proxy services for routing SM messages, access authentication and access authorization, transport for short message service (SMS) messages between the UE 304 and the short message service function (SMSF) (not shown), and security anchor functionality (SEAF). The AMF also interacts with the authentication server function (AUSF) (not shown) and the UE 304, and receives the intermediate key that was established as a result of the UE 304 authentication process. In the case of authentication based on a UMTS (universal mobile telecommunications system) subscriber identity module (USIM), the AMF retrieves the security material from the AUSF. The functions of the AMF also include security context management (SCM). The SCM receives a key from the SEAF that it uses to derive access-network specific keys. The functionality of the AMF also includes location services management for regulatory services, transport for location services messages between the UE 304 and the location management function (LMF) 370 (which may correspond to location server 172), as well as between the New RAN 220 and the LMF 370, evolved packet system (EPS) bearer identifier allocation for interworking with the EPS, and UE 304 mobility event notification. In addition, the AMF also supports functionalities for non-Third Generation Partnership Project (3GPP) access networks.

Functions of the UPF include acting as an anchor point for intra-/inter-RAT mobility (when applicable), acting as an external protocol data unit (PDU) session point of interconnect to the data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node.

The functions of the SMF 366 include session management, UE Internet protocol (IP) address allocation and management, selection and control of user plane functions, configuration of traffic steering at the UPF to route traffic to the proper destination, control of part of policy enforcement and QoS, and downlink data notification. The interface over which the SMF 366 communicates with the AMF 364 is referred to as the N11 interface.

Another optional aspect may include an LMF 370, which may be in communication with the NGC 360 to provide location assistance for UEs 304. The LMF 370 can be implemented as a plurality of separate servers (e.g., physically separate servers, different software modules on a single server, different software modules spread across multiple physical servers, etc.), or alternately may each correspond to a single server. The LMF 370 can be configured to support one or more location services for UEs 304 that can connect to the LMF 370 via the core network, NGC 360, and/or via the Internet (not illustrated).

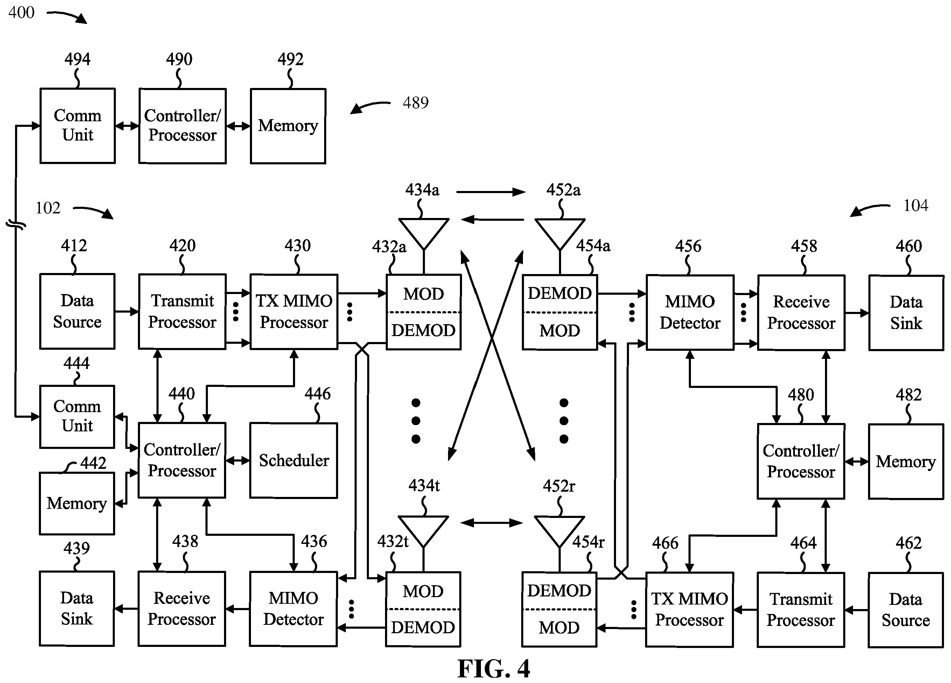

**FIG. 4** shows a block diagram of a design 400 of base station 102 and UE 104, which may be one of the base stations and one of the UEs in FIG. 1. Base station 102 may be equipped with T antennas 434a through 434t, and UE 104 may be equipped with R antennas 452a through 452r, where in general $T \geq 1$ and $R \geq 1$.

At base station 102, a transmit processor 420 may receive data from a data source 412 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 420 may also process system information (e.g., for semi-static resource partitioning information (SRPI) and/or the like) and control information (e.g., CQI requests, grants, upper layer signaling, and/or the like) and provide overhead symbols and control symbols. Transmit processor 420 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 430 may perform spatial processing (e.g., precoding) on the data symbols, the control symbols, the overhead symbols, and/or the reference symbols, if applicable, and may provide T output symbol streams to T modulators (MODs) 432a through 432t. Each modulator 432 may process a respective output symbol stream (e.g., for OFDM and/or the like) to obtain an output sample stream. Each modulator 432 may further process (e.g., convert to analog, amplify, filter, and upconvert) the output sample stream to obtain a downlink signal. T downlink signals from modulators 432a through 432t may be transmitted via T antennas 434a through 434t, respectively. According to various aspects described in more detail below, the synchronization signals can be generated with location encoding to convey additional information.

At UE 104, antennas 452a through 452r may receive the downlink signals from base station 102 and/or other base stations and may provide received signals to demodulators (DEMODs) 454a through 454r, respectively. Each demodulator 454 may condition (e.g., filter, amplify, down convert, and digitize) a received signal to obtain input samples. Each demodulator 454 may further process the input samples (e.g., for OFDM and/or the like) to obtain received symbols. A MIMO detector 456 may obtain received symbols from all R demodulators 454a through 454r, perform MIMO detection on the received symbols if applicable, and provide detected symbols. A receive processor 458 may process (e.g., demodulate and decode) the detected symbols, provide decoded data for UE 104 to a data sink 460, and provide decoded control information and system information to a controller/processor 480. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 464 may receive and process data from a data source 462 and control information (e.g., for reports comprising RSRP, RSSI, RSRQ, CQI, and/or the like) from controller/processor 480. Transmit processor 464 may also generate reference symbols for one or more reference signals. The symbols from transmit processor 464 may be precoded by a TX MIMO processor 466 if applicable, further processed by modulators 454a through 454r (e.g., for DFT-s-OFDM, CP-OFDM, and/or the like), and transmitted to base station 102. At base station 102, the uplink signals from UE 104 and other UEs may be received by antennas 434, processed by demodulators 432, detected by a MIMO detector 436 if applicable, and further processed by a receive processor 438 to obtain decoded data and control information sent by UE 104. Receive processor 438 may provide the decoded data to a data sink 439 and the decoded control information to controller/processor 440. Base station 102 may include communication unit 444 and communicate to network controller 489 via communication unit 444. Network controller 489 may include communication unit 494, controller/processor 490, and memory 492.

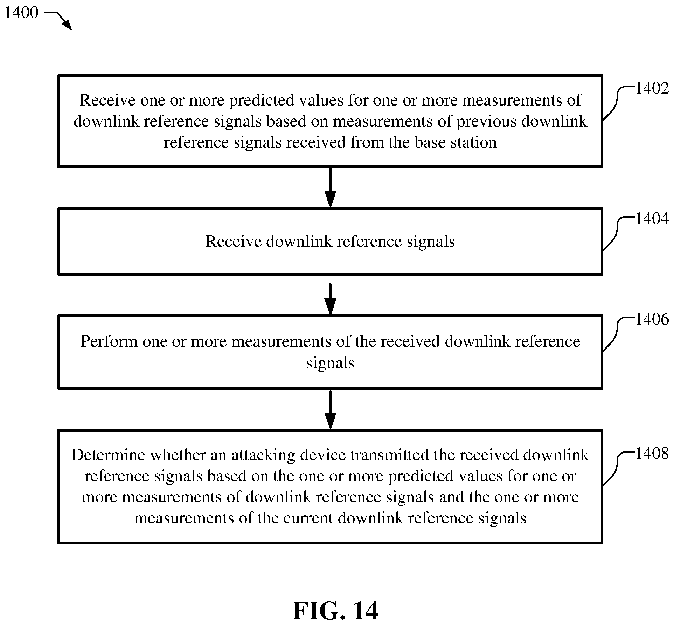

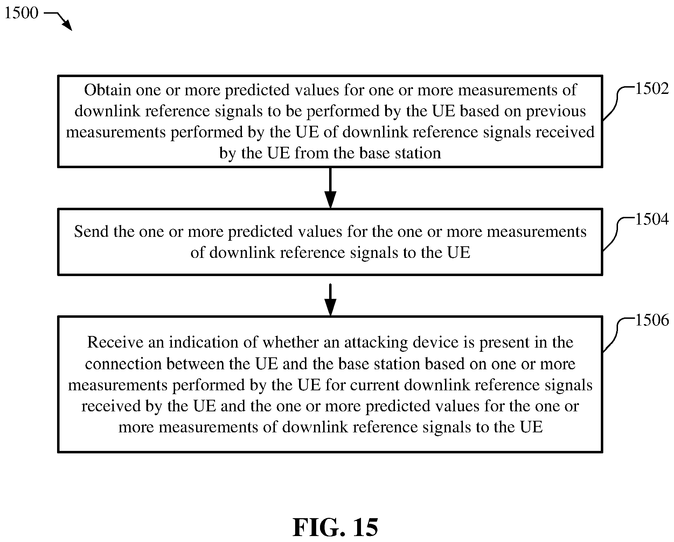

Controller/processor 440 of base station 102 and controller/processor 480 of UE 104 and/or any other component(s) of FIG. 4 may perform one or more techniques associated with authenticating a connection between the UE 104 and base station 102 in the physical layer and identify the presence of an unauthorized intervening device, as described in more detail elsewhere herein. For example, controller/processor 440 of base station 102 and/or controller/-processor 480 of UE 104, and/or any other component(s) of FIG. 4 may perform or direct operations of, for example, processes 1400 and 1500 of FIGs. 14 and 15, and/or other processes and algorithms as described herein. Memories 442 and 482 may store data and program codes for base station 102 and UE 104, respectively. In some aspects, memory 442 and/or memory 482 and/or memory392 may comprise a non-transitory computer-readable medium storing one or more instructions for wireless communication. For example, the one or more instructions, when executed by one or more processors of base station 102 and/or the UE 104 may perform or direct operations of, for example, processes 1400 and 1500 of FIGs. 14 and 15 and/or other processes as described herein.

As indicated above, FIG. 4 is provided as an example. Other examples may differ from what is described with regard to FIG. 4.

In 5G NR, supported positioning technologies include downlink based positioning, DL based positioning including DL-TDOA (using DL Received Signal Time Difference (RSTD) measurements) and DL-AoD (using Reference Signal Received Power (RSRP) measurements); uplink based positioning including UL-TDOA (using UL Relative Time of Arrival (RTOA) measurements) and UL-AoA (using RSRP measurements); and combined downlink and uplink based positioning including RTT with one or more neighboring base station (multi-RTT) (using RSRP measurements or Rx-Tx time difference measurements). In addition, E-CID based on radio resource management (RRM) measurements is supported in 5G NR (using RSRP measurements, or Reference Signal Received Quality (RSRQ) measurements).

During positioning using signaling in LTE and 5G NR, a UE typically acquires dedicated positioning signals transmitted by base stations, referred to as a Positioning Reference Signals (PRS), which are used to generate the desired measurements for the supported positioning technique. Positioning Reference Signals (PRS) are defined for 5G NR positioning to enable UEs to detect and measure more neighbor base stations or Transmission and Reception Points (TRPs). Other types of signals, i.e., signals that are not dedicated for positioning, may be used by the UE for positioning. Several configurations are supported to enable a variety of deployments (indoor, outdoor, sub-6, mmW). To support PRS beam operation, beam sweeping is additionally supported for PRS. Table 1 below illustrates 3GPP release numbers (e.g., Rel. 16 or Rel. 15) that define particular reference signals for various UE measurements and the accompanying positioning techniques.

TABLE 1

| DL/UL Reference Signals | UE Measurements | To facilitate support of the following positioning techniques |
|---|---|---|
| Rel.16 DL PRS | DL RSTD | DL-TDOA |
| Rel.16 DL PRS | DL PRS RSRP | DL-TDOA, DL-AoD, Multi-RTT |
| Rel.16 DL PRS / Rel.16 SRS for positioning | UE Rx-Tx time difference | Multi-RTT |

(continued)

| DL/UL Reference Signals | UE Measurements | To facilitate support of the following positioning techniques |
|---|---|---|
| Rel. 15 SSB / CSI-RS for RRM | SS-RSRP(RSRP for RRM), SS-RSRQ(for RRM), CSI-RSRP (for RRM), CSI-RSRQ (for RRM) | E-CID |

During positioning, the UL positioning reference signals that transmitted by a UE and received by one or more base stations is based on the release-15 (Rel-15) Sounding Reference Signals (SRS) with enhancements/adjustments for positioning purposes. The UL-PRS may sometimes be referred to as "SRS for positioning." A new Information Element (IE) is configured for SRS for positioning in RRC signaling. Table 2 below illustrates 3GPP release 16 measurements and positioning techniques that may use SRS for positioning.

TABLE 2

| DL/UL Reference Signals | gNB Measurements | To facilitate support of the following positioning techniques |
|---|---|---|
| Rel.16 SRS for positioning | UL RTOA | UL-TDOA |
| Rel.16 SRS for positioning | UL SRS-RSRP | UL-TDOA, UL-AoA, Multi-RTT |
| Rel.16 SRS for positioning, Rel.16 DL PRS | gNB Rx-Tx time difference | Multi-RTT |
| Rel.16 SRS for positioning | AoA and ZoA | UL-AoA, Multi-RTT |

Angle measurements, such as AoA ($\phi$) and zenith angle of arrival (ZoA ($\theta$)) define the estimated angles of a UE with respect to a reference direction which may be determined at the TRP antenna for an UL channel corresponding to the UE. The reference direction, for example, may be defined according to the Global Coordinate System (GCS) or a Local Coordinate System (LCS). LTE supports AoA, with the use of GCS, while 5G NR supports both AoA and ZoA and both GCS and LCS. Angle of arrival (AoA), as sometimes used herein, may refer to the azimuth of arrival, the zenith of arrival, or both the azimuth and zenith of arrival.

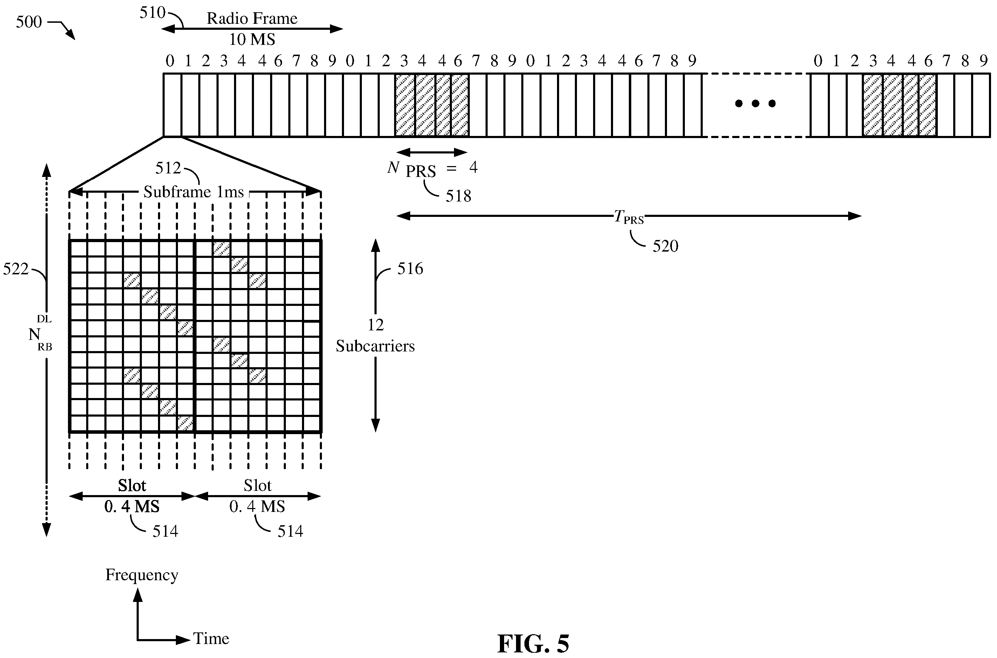

**FIG. 5** shows a structure of an exemplary subframe sequence 500 with positioning reference signal (PRS) positioning occasions, according to aspects of the disclosure. Subframe sequence 500 may be applicable to the broadcast of PRS signals from a base station (e.g., any of the base stations described herein) or other network node. The subframe sequence 500 may be used in LTE systems, and the same or similar subframe sequence may be used in other communication technologies / protocols, such as 5G and NR. In FIG. 5, time is represented horizontally (e.g., on the X axis) with time increasing from left to right, while frequency is represented vertically (e.g., on the Y axis) with frequency increasing (or decreasing) from bottom to top. As shown in FIG. 5, downlink and uplink radio frames 510 may be of 10 millisecond (ms) duration each. For downlink frequency division duplex (FDD) mode, radio frames 510 are organized, in the illustrated example, into ten subframes 512 of 1 ms duration each. Each subframe 512 comprises two slots 514, each of, for example, 0.5 ms duration.

In the frequency domain, the available bandwidth may be divided into uniformly spaced orthogonal subcarriers 516 (also referred to as "tones" or "bins"). For example, for a normal length cyclic prefix (CP) using, for example, 15 kHz spacing, subcarriers 516 may be grouped into a group of twelve (12) subcarriers. A resource of one OFDM symbol length in the time domain and one subcarrier in the frequency domain (represented as a block of subframe 512) is referred to as a resource element (RE). Each grouping of the 12 subcarriers 516 and the 14 OFDM symbols is termed a resource block (RB) and, in the example above, the number of subcarriers in the resource block may be written as $N_{SC}^{RB} = 12$. For a given channel bandwidth, the number of available resource blocks on each channel 522, which is also called the transmission bandwidth configuration 522, is indicated as $N_{RB}^{DL}$. For example, for a 3 MHz channel bandwidth in the above example, the number of available resource blocks on each channel 522 is given by $N_{RB}^{DL} = 15$. Note that the frequency component of a resource block (e.g., the 12 subcarriers) is referred to as a physical resource block (PRB).

A base station may transmit radio frames (e.g., radio frames 510), or other physical layer signaling sequences, supporting PRS signals (i.e. a downlink (DL) PRS) according to frame configurations either similar to, or the same as that, shown in FIG. 5, which may be measured and used for a UE (e.g., any of the UEs described herein) position estimation. Other types of wireless nodes (e.g., a distributed antenna system (DAS), remote radio head (RRH), UE, AP, etc.) in a wireless communications network may also be configured to transmit PRS signals configured in a manner similar to (or the same as) that depicted in FIG. 5.

A collection of resource elements that are used for transmission of PRS signals is referred to as a "PRS resource." The collection of resource elements can span multiple PRBs in the frequency domain and N (e.g., 1 or more) consecutive symbol(s) within a slot 514 in the time domain. For example, the cross-hatched resource elements in the slots 514 may be examples of two PRS resources. A "PRS resource set" is a set of PRS resources used for the transmission of PRS signals, where each PRS resource has a PRS resource identifier (ID). In addition, the PRS resources in a PRS resource set are associated with the same transmission-reception point (TRP). A PRS resource ID in a PRS resource set is associated with a single beam transmitted from a single TRP (where a TRP may transmit one or more beams). Note that this does not have any implications on whether the TRPs and beams from which signals are transmitted are known to the UE.

PRS may be transmitted in special positioning subframes that are grouped into positioning occasions. A PRS occasion is one instance of a periodically repeated time window (e.g., consecutive slot(s)) where PRS are expected to be transmitted. Each periodically repeated time window can include a group of one or more consecutive PRS occasions. Each PRS occasion can comprise a number $N_{PRS}$ of consecutive positioning subframes. The PRS positioning occasions for a cell supported by a base station may occur periodically at intervals, denoted by a number $T_{PRS}$ of milliseconds or subframes. As an example, FIG. 5 illustrates a periodicity of positioning occasions where $N_{PRS}$ equals 4 518 and $T_{PRS}$ is greater than or equal to 20 520. In some aspects, $T_{PRS}$ may be measured in terms of the number of subframes between the start of consecutive positioning occasions. Multiple PRS occasions may be associated with the same PRS resource configuration, in which case, each such occasion is referred to as an "occasion of the PRS resource" or the like.

A location server, e.g., location server 172, and a base station 102 (e.g. an eNodeB (eNB) for LTE access or an NR NodeB (gNB) for NR access) may exchange messages to enable the location server to (i) obtain position measurements for a particular UE from the base station, or (ii) obtain location information from the base station not related to a particular UE such as the location coordinates of an antenna for the base station, the cells (e.g. cell identities) supported by the base station, cell timing for the base station and/or parameters for signals transmitted by the base station such as PRS signals. In the case of LTE access, the LPP A (LPPa) protocol may be used to transfer such messages between a base station that is an eNodeB and a location server that is an E-SMLC. In the case of NR access, the New Radio Position Protocol A (which may be referred to as NPPa or NRPPa) protocol may be used to transfer such messages between a base station that is a gNodeB and a location server that is an LMF.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position $j$ is set to '0', then the UE may infer that the PRS is muted for a $j^{th}$ positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to the UE to enable the UE to perform PRS positioning measurements. The UE is not expected to blindly perform detection of PRS configurations.

Note that the terms "positioning reference signal" and "PRS" may sometimes refer to specific reference signals that are used for positioning in LTE/NR systems. However, as used herein, unless otherwise indicated, the terms "positioning reference signal" and "PRS" refer to any type of reference signal that is intended for positioning. Downlink (DL) or sidelink (SL) signals for which the primary purpose is unrelated to positioning, such as control or communication, are referred to herein as non-positioning reference signals (non-PRS). Examples of non-PRS include, but are not limited to, PHY channels, such as SSB, TRS, CSI-RS, PDSCH, DM-RS, PDCCH, PSSCH, and PSCCH. As discussed herein, the non-PRS signals, which are typically transmitted for purposes unrelated to positioning, may also be used by the UE for positioning purposes, e.g., in a hybrid positioning measurement. Similar to DL PRS transmitted by base stations, discussed above, a UE may transmit UL PRS for positioning, as well as UL or SL non-PRS that may be used for positioning. The UL PRS may be, e.g., sounding reference signals (SRS) for positioning.

Using received DL PRS or non-PRS from base stations or SL signaling from other UEs, and/or UL PRS or non-PRS transmitted to base stations or SL to other UEs, the UE may perform various positioning measurements, such as reference signal time difference (RSTD) measurements for time difference of arrival (TDOA) a positioning technique, reference signal received power (RSRP) measurements for TDOA, Angle of Departure (AoD), Angle of Arrival (AoA), and Round Trip Time (RTT) or multi cell RTT (multi-RTT) positioning techniques, time difference between reception and transmission of signals (Rx-Tx) for a multi-RTT positioning technique, etc.

Various positioning technologies rely on DL, UL or SL PRS, which may also use the DL, UL, or SL non-PRS. For example, positioning technologies that use reference signal include downlink based positioning, uplink based positioning, and combined downlink and uplink based positioning. For example, downlink based positioning includes positioning methods such as DL-TDOA and DL-AoD. Uplink based positioning includes positioning method such as UL-TDOA and UL-AoA. Downlink and uplink based positioning includes positioning method, such as RTT with one or more neighboring base station (multi-RTT). Other positioning methods exist, including methods that do not rely on PRS. For example, Enhanced Cell-ID (E-CID) is based on radio resource management (RRM) measurements.

Currently, positioning assistance data for PRS beams includes the azimuth and elevation angles of each DL-PRS Resource (beam), but does not provide any beam width information. The knowledge of PRS beam width (also some other beam pattern information, such as side lobe or back lobe information) may be used to assist in receiving the DL PRS beams, and may be used to enable the adaptation of UE Rx antenna for the purpose of UE power saving. For example, if a PRS beam is wide angle beam, a UE receiver with a single antenna will be highly likely to achieve high quality positioning measurement. Accordingly, the UE may configure its receiver with a single Rx antenna (or reduced number of Rx antennas) to save power consumption.

As discussed above, a number of positioning approaches are supported in 3GPP. In Release 16, assistance data from the network, e.g., location server 172, to UE 104 is provided within the NR Positioning Protocol (NRPP) of 3GPP 38.455 or LTE Positioning Protocol (LPP) of 3GPP 37.355. There are several gNB side angle estimation approaches for positioning. Downlink (DL) AoD based approach, for example, uses knowledge of the beam shapes of different gNB transmitted positioning reference symbol (PRS) beams along with knowledge of the received RSRPs with these PRSs at the UE to estimate the DL AoD. This estimation may occur on the network side, e.g., in the location server 172 in "UE-assisted" mode where the UE reports the measured RSRPs. Alternatively, in "UE-based" mode, the estimation may occur at the UE 104 which is informed of the beam shapes, including AoD used with PRS, e.g., in assistance data, and the UE 104 determines the identity of a received DL beam from which the DL AoD may be determined, and a position estimate may be generated. Currently, only the beam's boresight direction is indicated in assistance data.

Uplink (UL) AoA based approach, as another example, estimates the position of the UE 104 by the gNB or network, e.g., location server 172, based on the measurement of the UE's uplink transmissions (e.g., SRS) at the base stations 102. The base station reports its estimated AoA to a location server 172, which may be reported in global coordinate system (GCS) or local coordinate system (LCS). The reporting may be different for azimuth angle and elevation angle.

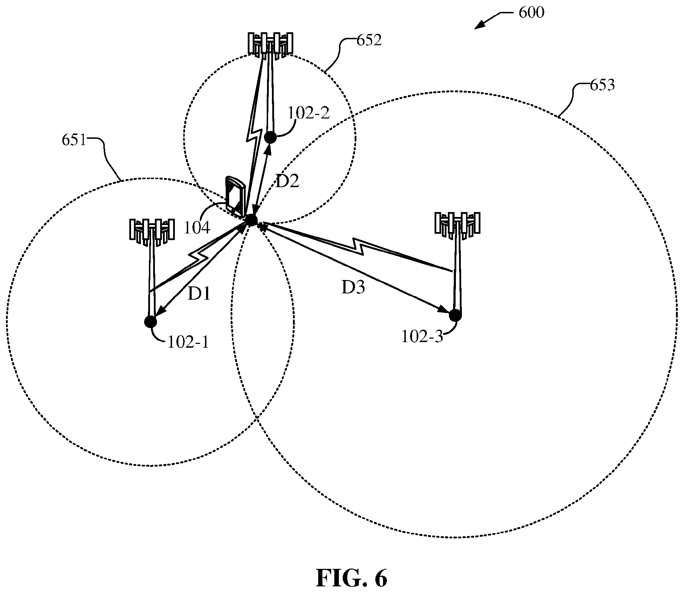

**FIG. 6,** for example, illustrates a simplified environment 600 and an exemplary technique for determining a position of a UE 104 using distances from a plurality of base stations 102-1, 102-2, 102-3 (sometimes collectively referred to as base stations 102). While three base stations are shown in FIG. 6, aspects may utilize additional gNBs. The distance between the UE 104 and each of the base stations 102 may be determined using, e.g., RSRP, RTT or other appropriate methods.

The RTT measurements may be obtained, for example, with a first entity, e.g., either UE 104 or a base station 102, transmitting an RTT measurement signal (or message) at time $t_0$, which is received by another entity, e.g., either base station 102 or UE 104, at time $t_1$. The time that it takes for the RTT measurement signal from the first entity to reach the second entity is the propagation delay that is due to the distance between the entities. After some time (processing delay), the second entity transmits an RTT response signal (or message) at time $t_2$, which is received by the first entity at time $t_3$. The time that it takes for the RTT response signal from the second entity to reach the first entity is another propagation delay that is due to the distance between the entities. Ignoring factors, such as timing advance (TA), which compensates for misalignment between transmission and reception timing, the RTT may be calculated as RTT=$[t_3-t_0] - [t_2-t_1]$, which is equal to approximately twice the distance D between the entities divided by the signal propagation velocity (speed of light). Thus, the distance D1, D2, and D3 between the UE 104 and each of the base stations 102-1, 102-2, and 103-3, respectively, may be determined.

In order to determine the position of the UE 104, the network geometry, e.g., known geographic location of each of the base stations 102 in a reference coordinate system, may be used. For a UE based positioning procedure, the network geometry may be provided to the UE 104 in any manner, such as, for example, providing the information in beacon signals, providing the information using a server, e.g., in positioning assistance data, providing the information using uniform resource identifiers, etc.

With the distance D1, D2, and D3 between UE 104 and each respective gNBs base station 102-1, 102-2, 102-3 determined using multi-RTT, and the positions of the base stations known, the position of the UE 104 may be solved using a variety of known geometric techniques, such as, for example, trilateration. For example, from FIG. 6, it can be seen that circles 651, 652, and 653 centered on respective gNBs 102-1, 102-2, 102-3 have radii equal to the distances D1, D2, and D3. The position of the UE 104 ideally lies at the common intersection of all of the circles 651, 652, and 653. Uncertainty in the base station 102 coordinates or the distance measurements will directly impact the accuracy of the UE location estimate.

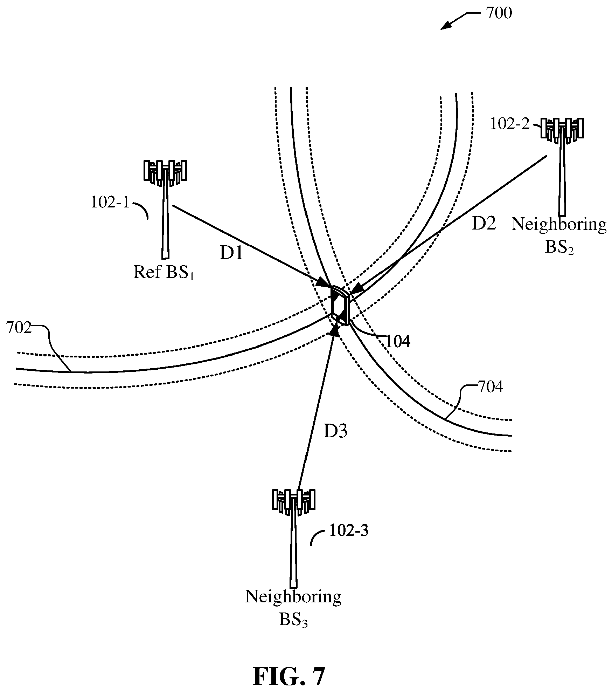

**FIG. 7,** for example, illustrates another simplified environment 700 and an exemplary technique for determining a position of a UE 104 using Time Difference of Arrival (TDOA) technique with from a plurality of base stations 102-1, 102-2, 102-3 (sometimes collectively referred to as base stations 102). While three base stations are shown in FIG. 7, aspects may utilize additional gNBs.

In the example of FIG. 7, a UE 104 may determine an estimate of its position, or assist another entity (e.g., a base station or core network component, another UE, a location server, a third party application, etc.) to determine an estimate of its position. The UE 104 may communicate wirelessly with a plurality of base stations 102-1, 102-2, and 102-3 (collectively, base stations 102), which may correspond to any combination of base stations 102 in FIG. 1, using RF signals and standardized protocols for the modulation of the RF signals and the exchange of information packets. By extracting different types of information from the exchanged RF signals, and utilizing the layout of the wireless communications system 700 (i.e., the base stations' locations, geometry, etc.), the UE 104 may determine its position, or assist in the determination of its position, in a predefined reference coordinate system. In an aspect, the UE 104 may specify its position using a two-dimensional coordinate system; however, the aspects disclosed herein are not so limited, and may also be applicable to determining positions using a three-dimensional coordinate system, if the extra dimension is desired. Additionally, while FIG. 7 illustrates one UE 104 and three base stations 102, as will be appreciated, there may be more UEs 104 and more or fewer base stations 102.

To support position estimates, the base stations 102 may be configured to broadcast reference RF signals (e.g., PRS, CRS, CSI-RS, synchronization signals, etc.) to UEs 104 in their coverage area to enable a UE 104 to measure characteristics of such reference RF signals. For example, the UE 104 may use the TDOA positioning method, which is a multilateration method in which the UE conventionally measures the time of arrival (TOA) of specific reference RF signals (e.g., PRS, CRS, CSI-RS, etc.) transmitted by different pairs of network nodes (e.g., base stations 102, antennas of base stations 102, etc.). The TOA from several neighbor base stations may be subtracted from a TOA from a reference base station to determine the RSTDs for the base station pairs.

Generally, RSTDs are measured between a reference network node and one or more neighbor network nodes. In the example illustrated in FIG. 7, base station 102-1 may be the serving base station for UE 104 and may further serve as the reference base station, while base stations 102-2 and 102-3 server a neighboring base stations. The reference network node remains the same for all RSTDs measured by the UE 104 for any single positioning use of TDOA and would typically correspond to the serving cell for the UE 104 or another nearby cell with good signal strength at the UE 104. In an aspect, where a measured network node is a cell supported by a base station, the neighbor network nodes would normally be cells supported by base stations different from the base station for the reference cell and may have good or poor signal strength at the UE 104. The RSTD conventionally the relative timing difference between two cells, e.g., the reference cell and the neighboring cell, which is determined based on the smallest time difference between two subframe boundaries from the two different cells.

The RSTD is the time difference between the neighboring base station 102-i and reference base station 102-1 measured at the UE 104. The RSTD measurements may be defined as the time difference between two base stations (modulo 1-subframe (1-ms)), and therefore, correspond to the range differences between a neighbour base station 102-i and the reference base station 102-1. At least two neighbour base station measurements i are needed, but more than two neighbour base station measurements are desirable, and the system of equations may be solved in the least-squares, or weighted-least-squares sense. The transmit time offsets (Ti-T1) from the transmitting base stations should (ideally) be zero in a synchronized network or accounted for in asynchronous network, so that the RSTD defines the time-difference-of-arrival (TDOA). Geometrically, each TDOA defines a hyperbola 702 and 704, where the width of the hyperbola is determined by the TDOA errors (ni - n1) or uncertainty as shown in FIG. 7 with dotted lines. If the base stations 102 coordinates are known and the transmit time offsets (Ti-T1) are known at the location server 172 (e.g., LMF 270) or at the UE 104, the position of the UE 104 may be determined. Uncertainty in the base station 102 coordinates or the TDOA measurements will directly impact the accuracy of the UE location estimate.

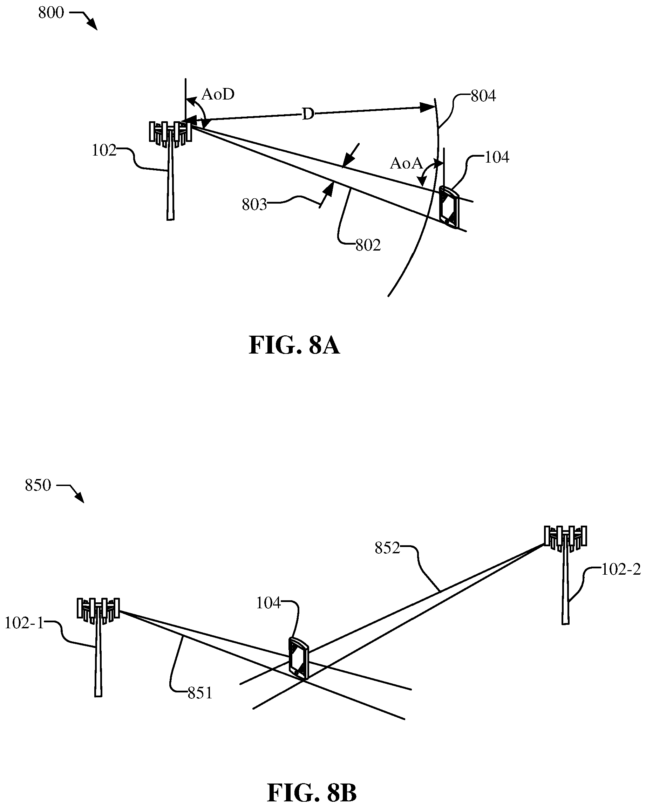

**FIG. 8A** illustrates another simplified environment 800 and an exemplary technique for determining a position of a UE 104 using DL AoA or DL AoD of a beam 802. FIG. 8A illustrates the AoA or AoD measurement of the signal 402 as including an uncertainty 803. In the example of FIG. 8A, a base station 102 (e.g., any of the base stations described herein) transmits a DL reference signal, such as PRS, to the UE 104. The base station 102 transmits a signal on a number of transmit beams using a directional antenna, which is received by the UE 104. The UE 104 may measure the angle of arrival AoA of the signal 82 using a directional antenna that may produce a number of receive beams. For example, each of the receive beams will result in a different received signal strength (e.g., RSRP, RSRQ, SINR, etc.) of the one or more reference signals at the UE 104. Further, the channel impulse response of the one or more reference signals will be smaller for receive beams that are further from the actual LOS path between the base station 102 and the UE 104 than for receive beams that are closer to the LOS path. Likewise, the received signal strength will be lower for receive beams that are further from the LOS path than for receive beams that are closer to the LOS path. As such, the UE 104 may identify the receive beam that results in the highest received signal strength and the strongest channel impulse response, and estimate the angle from itself to the base station 102 as the AoA of that receive beam 802. For example, the receive antenna in the UE 104 has a known relation to the coordinate system of the UE 104 and the UE 104 may measure its relation to a coordinate system, e.g., global coordinate system (GCS) or local coordinate system (LCS), using sensors, such as magnetometers, accelerometers, gyroscopes, camera, etc., with which the angle of arrival with respect to the receive antenna in the UE 104 may be converted to GCS or LCS.

Additionally or alternatively, the AoD may be determined by the UE 104 identifying the transmit beam that is received with the highest received signal strength and the strongest channel impulse response. The AoD of each transmit beam from the base station 102 with respect to the GCS or LCS is known, and may be provided to the UE 104, e.g., in assistance data, for UE based positioning, or provided to a location server for UE assisted positioning. Thus, the AoD of the reference signal received by the UE 104 may be determined.

The UE 104 may also estimate the distance D between itself and the base station 102, e.g., by performing an RTT positioning procedure with the base station 102 or RSRP, or timing advance measurements. The timing advance is typically the RTT between a base station and a UE, or double the propagation time in one direction, and therefore, can be used to estimate the distance between the base station 802 and the UE 804 the same as an actual RTT procedure.

Based on the angle between the base station 102 and the UE 104 (based on the AoA or the AoD), knowledge of the distance D from the UE 104 to the base station 102, and the known geographic location of the base station 102, the location of the UE 104 may be estimated.

**FIG. 8B** illustrates another simplified environment 850 and performing AoA or AoD position determination with base stations 102-1 and 102-2. The AoA or AoD of each signal 851 and 852 may be determined as discussed in FIG. 8A. As illustrated the AoA or AoD measurements 851 and 852 determined by respective UE 104 intersect at the position of the UE 104. Accordingly, the position of the UE 104 may be determined based on the AoA or AoD measurements without the need for a distance measurement.

In general, wireless communications system are vulnerable to a variety of insecurities. In some instances, particularly when wireless information and/or location-based services are offered in public forums (e.g., a shopping mall, office building, etc.), potential security risks can arise given the possibility of malicious entities exploiting the network to gain unauthorized access to sensitive information. Such security risks may include "man in the middle", "spoofing and/or "phishing types of cyber-attacks. Such attacks may be based upon the malicious entity successfully masquerading as a legitimate entity by manipulating network protocols, falsifying credentials, and/or fooling a user to compromise network integrity for gaining illegitimate advantage.

UEs, for example, may be used to relay data to other UEs in sidelink channels and for coverage enhancement applications. Relaying data between UEs, however, raises concerns about man-in-the-middle and replay attacks. Such attacks, for example, may be undertaken if the physical layer is used for authentication of transmissions. Using channel characteristics and prediction techniques, e.g., for measurements of downlink reference signals over time, such as positioning measurements or channel parameter measurements, a UE may determine using the physical layer whether received downlink transmissions are most likely from an authentic transmitter.

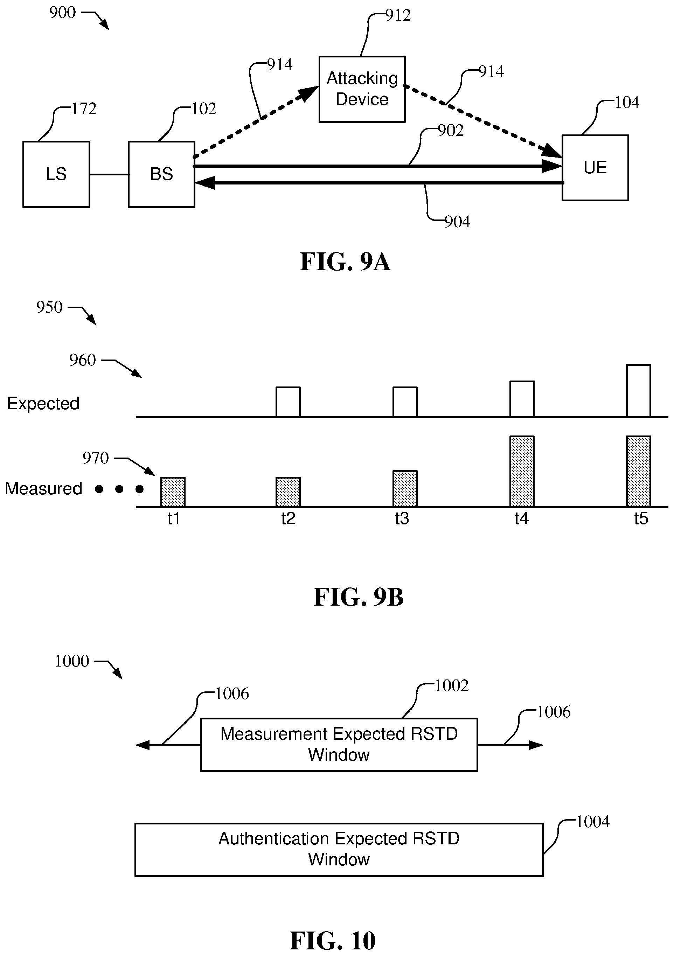

**FIG. 9A,** for example, illustrates an environment 900 in which a replay attack or man-in-the-middle attack may be performed by an attacking device 912. As illustrated, a base station 102 and a UE 104 may be engaged in wireless communications in which DL signals 902 are transmitted by the base station 102 and received by the UE 104. The UE 104 may respond to the base station 102 with UL signals 904.

At some time during the wireless communications, an attacking device 912 may receive DL signals 914 from the base station 102 and may relay these signals 914 to the UE 104. The attacking device 912, for example, may relay the DL signals 914 so that the UE 104 is unaware that the DL signals 914 are not directly from the base station 102 but are being relayed from the attacking device 912. The attacking device 912 may decode the intercepted DL signals 914. Consequently, the DL signals 914, which are intended for the UE 104 are intercepted by the attacking device 912 and relayed to the UE 104 so that neither the base station 102 nor the UE 104 is aware that the attacking device 912 is intercepting wireless communications intended for the UE 104.

In an implementation, the integrity and authentication of the connection between the UE 104 and a base station 102 may be maintained based on a comparison of predicted values for one or more physical layer measurements and the actual values of the one or more physical layer measurements, from which the presence of an unauthorized intervening entity may be detected. The physical layer measurements are for velocity of the UE and further may be positioning measurements of downlink reference signals, such as RSRP, Rx-Tx, TOA, RTT, AoD, AoA, etc., as well as direction of travel, or channel parameters. The predicted values of the one or more positioning measurements of downlink reference signals, for example, are based on one or more previous positioning measurements of downlink reference signals received from the base station 102 to which the UE 104 is connected. By comparing the predicted positioning measurements based on previous measurements to current positioning measurements, it is possible to determine whether transmissions are originating from the same base station over time. The UE 104 may report to the base station or a server when the UE 104 determines that an intervening entity may be present in the communication channel or may provide periodic reports, e.g., indicating whether or not an intervening entity has been detected.

FIG. 9B, by way of example, is a graph 950 illustrating a number of expected positioning measurement values 960 and current positioning measurement values 970 that may be compared to identify the presence of an attacking device 912 in FIG. 9A. The expected positioning measurements 960 are provided by the base station 102 or a location server 172 and are generated based on a number of previous positioning measurements performed by the UE 104. The expected positioning measurements are sent periodically to the UE 104, as illustrated in FIG. 9B by expected positioning measurement sent at times t2, t3, t4, t5. The downlink reference signal that is measured by the UE 104 and compared to an expected positioning measurement is transmitted by the base station within a limited time period from the transmission of the expected positioning measurement so that the expected positioning measurement and the actual positioning measurement are correlated. For example, shortly after the expected positioning measurement is sent at time t2, the base station 102 should transmit a downlink reference signal that is measured by the UE 104 and perform a positioning measurement, which is illustrated in FIG. 9B as aligned with time t2.

In order for the comparison to be valid, the downlink reference signal that is measured by the UE 104 should be transmitted close in time to the transmission of the expected positioning measurement. The greater the time period between the expected positioning measurement and the transmission of the downlink reference signal, the greater the possible error between the expected and actual positioning measurements. In some implementations, an acceptable error may be provided with the expected positioning measurement. In some implementations, the acceptable error may be dynamic and may vary based on the amount of time between receiving (or transmitting) the expected positioning measurement and receiving (or transmitting) the downlink reference signal that is measured for the actual positioning measurement, e.g., with an increased amount of time corresponding to an increase in the acceptable error.

The expected and actual positioning measurement values 960 and 970, which are illustrated simply as bars in FIG. 9B, may be for RSRP values, RSTD values and/or uncertainties, AoA values and/or uncertainties, AoD values and/or uncertainties, RTTs, etc. Each expected positioning measurement value 960 may be generated based on a plurality of previous positioning measurement values, e.g., three or more, reported by the UE 104, e.g., after using upper-layer initial authentication to authenticate the connection between the UE 104 and a base station 102. For example, as indicated by dots, the UE 104 may obtain positioning measurement values 970 over a period of time (including time t1), which may be provided to the base station 102 or location server 172. The base station 102 or location server 172 may use the previously positioning measurements to generate an expected positioning measurement value for a future time, e.g., time t2. The expected positioning measurement value may be determined as an average (or other statistical combination) of the previous positioning measurement values. In some implementations a weighted average may be used, e.g., with more recent measurement values having greater weight than less recent measurement values.

As illustrated in FIG. 9B, the expected positioning measurement values 960 at times t2, and t3 closely match the actual positioning measurement values 970 at corresponding times. For example, referring to FIG. 9A, because the expected positioning measurement values 960 at times t2, and t3 closely match the actual positioning measurement values 970 at corresponding times, it may be determined that at times t2 and t3 the UE 104 received the downlink reference signals directly from base station 102, e.g., from DL signals 902. While there may be a change in relative position between the UE 104 and base station 102, e.g., if the UE 104 is moving, the use of a plurality of previous positioning measurement values from the UE 104 to generate the expected positioning measurement values 960 at each time t1, t2, and t3 allows the change in position over time to be included in the expected positioning measurement values 960.

As illustrated in FIG. 9B, the expected positioning measurement value 960 at time t4 is approximately the same as the expected positioning measurement value 960 at time t3, but the actual measured positioned measurement value 970 is significantly increased. The difference between the expected positioning measurement value 960 at time t4 and the actual positioning measurement value 970 at time t4 may be greater than a predetermined threshold, e.g., an acceptable error provided with the expected positioning measurement value 960 and/or determined by the UE 104 based on the amount of time between receiving the expected positioning measurement value 960 and receiving the downlink reference signal. Thus, a comparison of the expected positioning measurement value 960 at time t4 and the actual positioning measurement value 970 for the corresponding time may indicate that the downlink reference signal transmitted at time t4 (or shortly thereafter) is not from the same entity that transmitted the downlink reference signal at previous times, e.g., times t1, t2, or t3. For example, referring again to FIG. 9A, the discrepancy between the expected positioning measurement value 960 at time t4 and the actual positioning measurement value 970 for the corresponding time may indicate that the actual positioning measurement value 970 was measured from reference signals from the attacking device 912, e.g., signals 914 from the attacking device 912.

If the actual positioning measurement value is outside the expected values, e.g., more than the acceptable error, the UE 104 may report an indication that an attacking device may be present in the communication channel between the UE 104 and the base station 102. For example, UE 104 may report a "warning-flag" indicating that an intervening entity may be present. Additionally, or alternatively, the UE 104 may report the actual positioning measurement value, which the base station 102 or location server 172 may use to determine or verify that an attacking device is present. The UE 104, for example, may report the actual positioning measurement value, for example, even if the UE 104 is performing UE-based positioning measurements.

Thus, in some implementations, one or more expected values of DL PRS RSRP (e.g. expected RSRP) may be provided to the UE 104 to determine whether new measurements of the resources RSRP are within an acceptable error, to indicate whether the DL transmissions are from an authenticated base station 102 or not, indicating that the DL transmissions are from the attacking device 912, referring to FIG. 9A.

In some implementations, a set of expected RSTD values and/or expected RSTD-Uncertainty may be provided to the UE 104, i.e., in addition to expected RSTD values and uncertainty provided in positioning assistance data as an RSTD search window during a positioning session. In some implementations, an extension RSTD search window may be provided to the UE 104, such that when the UE 104 measures the RSTD, if the measurement is outside the extension of the RSTD search window or outside the expected RSTD values and uncertainty, the UE 104 may determine that an attacking device is present and may send a corresponding report indicating the presence of an attacking device, e.g., as a "warning-flag" or the measured RSTD value, e.g., even if the UE 104 is in a UE-based positioning mode.

In some implementations, the expected AoD and/or expected AoD-Uncertainty for zenith or azimuth angles may be provided to the UE 104 (e.g., as assistance data), along with, in some implementations, an acceptable error. If the measured AoD is outside these bounds, the UE 104 may determine that an attacking device is present and may send a corresponding report indicating the presence of an attacking device, e.g., as a "warning-flag" to the base station 102 or location server 172.

In some implementations, the expected TOA and/or RTT values may be provided to the UE 104, along with, in some implementations, an acceptable error. If the measured TOA or RTT values are outside these bounds, the UE 104 may determine that an attacking device is present and may send a corresponding report indicating the presence of an attacking device, e.g., as a "warning-flag" to the base station 102 or location server 172

In accordance with the independent claims, the expected or predicted velocity and optionally the expected or predicted direction, or channel parameters, or any combination thereof, is provided to the UE 104. The channel parameters, for example, may be used to predict some channel coefficients that could be used to indicate if the current channel after time offset from a previous transmissions corresponds with the channel estimated from the previous transmissions. A discrepancy in the predicted and measured channel coefficients may be used to indicate a presence of an attacking device. Similarly, in accordance with the independent claims, a mismatch in the predicted and actual velocity of the UE 104 may be used to indicate a presence of an attacking device, which may then be reported.

**FIG. 10** illustrates, by way of example, an example 1000 of predicted measurement values received for positioning measurements and predicted measurement values for security. The predicted measurement values for positioning measurements are illustrated as an expected RSTD search window 1002, which may be received in positioning assistance data, and the predicted measurement values for security is illustrated as a security RSTD search window 1004. The UE 104 may receive the security RSTD search window 1004 in addition to the positioning RSTD search window 1002. The additional security RSTD search window 1004 may be defined with respect to the positioning RSTD search window 1002 for each PRS pair. The security RSTD search window 1004 for example, may be larger than the positioning RSTD search window 1002, e.g., extending $1\mu s$ from both sides. The security RSTD search window 1004 may be defined based on the center of the positioning RSTD search window 1002 or may be defined as extensions 1006, which when combined with the positioning RSTD search window 1002 define the security RSTD search window 1004. Similar windows may be used for TOA, AOD, and velocity measurements, wherein the velocity measurements are in accordance with the independent claims.

Similarly, a location server 172 may provide the base stations 102 (e.g., the serving base station and/or neighboring base stations), through NRPPa signaling, the expected or predicted values of the physical layer measurements that the base stations are performing (e.g., UL-AoA, RTOA). If the base station 102 performs a measurement that is outside the configured window, then the base station 102 may provide an indication, such as a "warning" message or report of the measurement values, to the location server 172 and/or the UE 104.

The number of predicted values for the positioning measurements may be LPP/RRC/MAC-CE/DCI configured parameters, configured as part of report configuration. Moreover, timestamps, or simply times used for predications given current measurements, may be provided to the UE 104 through LPP/RRC/MAC-CE signaling, and may be used by the UE 104 to determine whether the expected positioning measurement values correlate to the current positioning measurement values appropriately and/or to adjust acceptable error for the comparison of the expected and actual positioning measurement values.

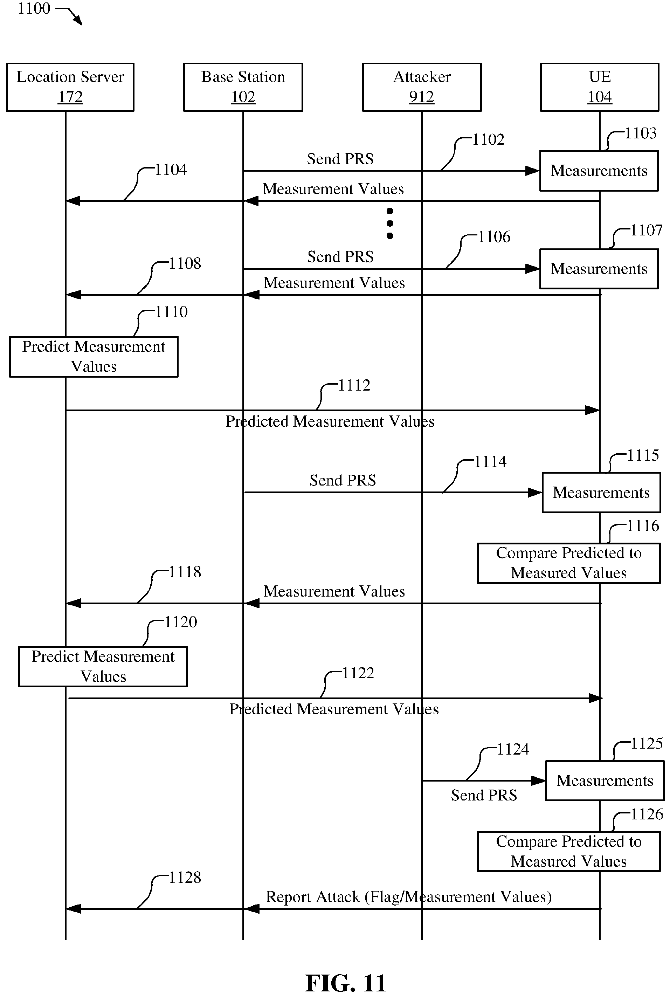

**FIG. 11** is a message flow 1100 illustrating the messaging in a wireless network to authenticate a connection between a UE and a base station and identify the presence of an intervening device between the UE and the base station that may be performing an active attack, such as a man-in-the-middle or replay attack. The message flow 1100, for example, illustrates signaling between UE 104 and base station 102 and location server 172 as discussed herein. It should be understood that messages related to the detection of the attacking device 912 are illustrated, but that additional messages, including conventional messages, may be used in the message flow 1100.

At stage 1102, the base station 102 may send a reference signal, e.g., such as a PRS signal, to the UE 104 after upper-layer initial authentication has been performed. It should be understood that the reference signal is not limited to a PRS, but may be other types of reference signals, such as CRS, PSS, SSS, etc.

At stage 1103, the UE 104 may perform one or more measurements on the received reference signals, such as RSRP, RSTD, TOA, AoA, RTT, etc. Other measurements may include velocity (which is in accordance with the independent claims), direction of travel or channel parameters. It should be understood that some measurements may require additional signaling not shown in FIG. 11, such as PRS signals sent from a second base station for RSTD measurements, or UL signals sent from the UE 104 to the base station 102 for RTT measurements.

At stage 1104, the measurement values produced in stage 1103 may be sent to the base station 102, which in some implementations may send the measurement values to the location server 172.

As illustrated by stages 1106, 1107, and 1108, the process of receiving reference signals, performing one or more positioning measurements on the reference signals and sending the measurement values to the base station 102 and/or location server 172 may be performed multiple times.

At stage 1110, the location server 172 may generate predicted measurement values for the UE 104 for reference signals transmitted by the base station 102 based on the plurality of measurement values received from the UE 104, e.g., in stages 1104 and 1108. The predicted measurement values, for example, may be generated based on the plurality of previous positioning measurement values based on an average (or other statistical combination) of the previous positioning measurement values. In some implementations a weighted average may be used, e.g., with more recent measurement values having greater weight than less recent measurement values. In some implementations, the predicted measurement values 1110 may be generated at the base station 102 instead of the location server 172. The predicted measurement values may include uncertainties or acceptable errors.

At stage 1112, the location server 172 (or the base station 102) may send the predicted measurement values to the UE 104. A time stamp may be provided with the predicted measurement values. It should be understood that the predicted measurement values sent to the UE 104 are for security as opposed to positioning measurements, and thus, may be sent in addition to predicted values sent in positioning assistance data during a positioning session, such as discussed in FIG. 10.

At stage 1114, the base station 102 may send another reference signal, e.g., such as a PRS signal, to the UE 104. The reference signal sent at stage 1114 should be transmitted close in time to the predicted measurement values received at stage 1112, e.g., so that the predicted measurement values are correlated to measurements performed on the reference signal of stage 1114.

At stage 1115, the UE 104 may perform the one or more measurements on the received reference signals, such as RSRP, RSTD, TOA, AoA, RTT, velocity (which is in accordance with the independent claims), direction of travel, channel parameters, etc., similar to stage 1103.

At stage 1116, the UE 104 may compare the predicted measurement values to the actual measurement values obtained in stage 1115. For example, the UE 104 may compare the predicted and actual measurement values and determine whether the actual measurement values are within a predetermined threshold to the predicted measurement values. The predetermined threshold may be, e.g., the uncertainty or acceptable errors that may be received with the predicted measurement values at stage 1116. In some implementation, the acceptable error may be based at least partly on the time elapsed between the predicted measurement values (e.g., the time stamp included with the predicted measurement values) and receiving the reference signals at stage 114. Assuming the predicted and actual measurement values matched within the predetermined threshold, the reference signals transmitted in stage 1114 may be considered authenticated and to be from base station 102.

At stage 1118, the measurement values produced in stage 1115 may be sent to the base station 102, which in some implementations may send the measurement values to the location server 172.

At stage 1120, the location server 172 may generate predicted measurement values for the UE 104 for reference signals transmitted by the base station 102 based on the plurality of measurement values received from the UE 104, e.g., in stages 1104 and 1108 and 1118, similar to stage 1110.

At stage 1122, the location server 172 (or the base station 102) may send the predicted measurement values to the UE 104. A time stamp may be provided with the predicted measurement values.

At stage 1124, reference signals, e.g., such as a PRS signals, are sent to the UE 104 by the attacking device 912. The reference signals, for example, may be received by the attacking device 912 from the base station 102 and forwarded to the UE 104.

At stage 1125, the UE 104 may perform the one or more measurements on the received reference signals, such as RSRP, RSTD, TOA, AoA, RTT, etc., similar to stage 1103.

At stage 1126, the UE 104 may compare the predicted measurement values to the actual measurement values obtained in stage 1125, similar to stage 1116. Because the reference signals received at stage 1124 are from a different entity than the base station 102, the predicted measurement values received at stage 1122 (which are based on measurements of reference signals from base station 102) will not closely match the actual measurement values of the reference signals received from the attacking device 912 at stage 1124. For example, the attacking device 912 is not located in exactly the same position as the base station 102, and accordingly positioning measurements for signals sent by the attacking device 912 will differ from predicted positioning measurement for signals transmitted by the base station 102. Further, the difference in position between the attacking device 912 and the base station 102 will be perceived as a sudden change in velocity by the UE 104 (e.g., the UE 104 will appear to travel an increased distance over time), and the direction of travel may differ, and accordingly the velocity or direction of travel will differ from the predicted velocity or direction of travel. Moreover, because the attacking device 912 is different, the channel parameters, such as channel coefficients, for the attacking device 912 will differ from those predicted for the base station 102. Accordingly, a comparison of the predicted and actual measurement values will not match within the predetermined threshold, indicating that the reference signals received at stage 1124 are not from base station 102 and therefore are not authenticated.

At stage 1128, the UE 104 may transmit to the base station 102 and/or location server 172 an indication of the detected attack, such as a warning flag and/or the measurement values.

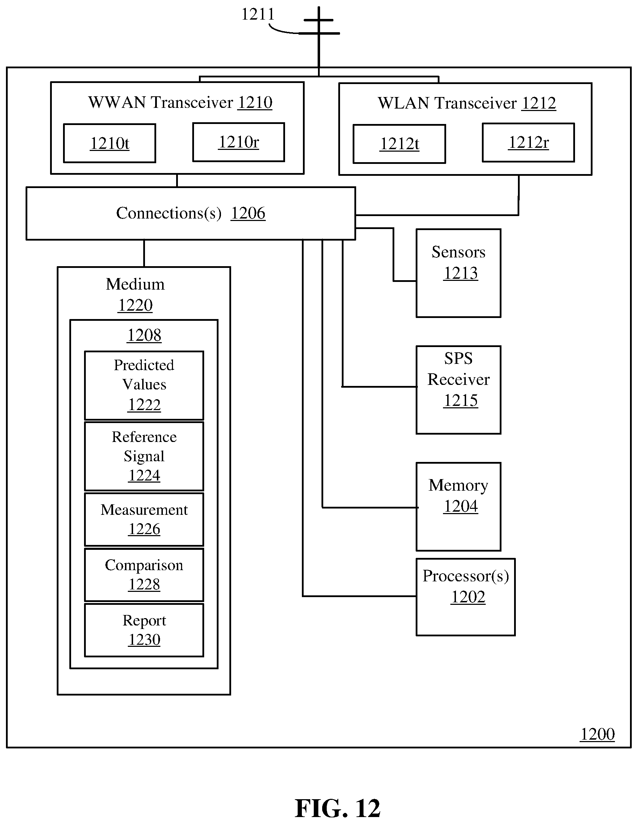

**FIG. 12** shows a schematic block diagram illustrating certain exemplary features of a UE 1200, e.g., which may be a UE 104 in FIG. 1 and is configured to support authentication of a connection with a base station and identification of the presence of an intervening device between the UE and a base station, as described herein. The UE 1200 may perform the message flow shown in FIG. 11 and the process flow 1400 shown in FIG. 14, and supporting algorithms as discussed herein. The UE 1200 may, for example, include one or more processors 1202, memory 1204, an external interface such as at least one wireless transceivers (e.g., wireless network interface) illustrated as WWAN transceiver 1210 and WLAN transceiver 1212, satellite positioning system (SPS) receiver 1215, and one or more sensors 1213, which may be operatively coupled with one or more connections 1206 (e.g., buses, lines, fibers, links, etc.) to non-transitory computer readable medium 1220 and memory 1204. The SPS receiver 1215, for example, may receive and process SPS signals from satellite vehicles (SVs). The one or more sensors 1213, for example, may be an inertial measurement unit (IMU) that may include one or more accelerometers, one or more gyroscopes, a magnetometer, etc. The UE 1200 may further include additional items, which are not shown, such as a user interface that may include e.g., a display, a keypad or other input device, such as virtual keypad on the display, through which a user may interface with the UE. In certain example implementations, all or part of UE 1200 may take the form of a chipset, and/or the like.

The UE 1200 may include at least one wireless transceiver, such as transceiver 1210 for a WWAN communication system and transceiver 1212 for a WLAN communication system, or a combined a transceiver for both WWAN and WLAN. The WWAN transceiver 1210 may include a transmitter 1210t and receiver 1210r coupled to one or more antennas 1211 for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The WLAN transceiver 1212 may include a transmitter 1212t and receiver 1212r coupled to one or more antennas 1211 or to separate antennas, for transmitting (e.g., on one or more uplink channels and/or one or more sidelink channels) and/or receiving (e.g., on one or more downlink channels and/or one or more sidelink channels) wireless signals and transducing signals from the wireless signals to wired (e.g., electrical and/or optical) signals and from wired (e.g., electrical and/or optical) signals to the wireless signals. The transmitters 1210t and 1212t may include multiple transmitters that may be discrete components or combined/integrated components, and/or the receivers 1210r and 1212r may include multiple receivers that may be discrete components or combined/integrated components. The WWAN transceiver 1210 may be configured to communicate signals (e.g., with base stations and/or one or more other devices) according to a variety of radio access technologies (RATs) such as 12G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), etc. New Radio may use mm-wave frequencies and/or sub-6GHz frequencies. The WLAN transceiver 1212 may be configured to communicate signals (e.g., with access points and/or one or more other devices) according to a variety of radio access technologies (RATs) such as 3GPP LTE-V2X (PC5), IEEE 1202.11 (including IEEE 1202.11p), WiFi, WiFi Direct (WiFi-D), Bluetooth®, Zigbee etc. The transceivers 1210 and 1212 may be communicatively coupled to a transceiver interface, e.g., by optical and/or electrical connection, which may be at least partially integrated with the transceivers 1210 and 1212.

In some embodiments, UE 1200 may include antenna 1211, which may be internal or external. UE antenna 1211 may be used to transmit and/or receive signals processed by wireless transceivers 1210 and 1212. The antenna 1211 may include an antenna array, which may be capable of receive beamforming, e.g., by increasing the gain setting and/or adjust the phase setting of an array of antennas in a particular direction to amplify (e.g., to increase the gain level of) the RF signals received from that direction. The antenna 1211 may further include a plurality of antenna panels, wherein each antenna panel is capable of beamforming. The antenna 1211 is capable of adaptation, e.g., selection of one or more antennas for controlling receiving transmitted beams from a base station. A reduced number of beams or a single beam, for example, may be selected for reception of a wide angle beam, e.g., to reduce power consumption, while an increased number of antennas in an antenna array may be selected when the transmit beam is relatively narrow. In some embodiments, UE antenna 1211 may be coupled to wireless transceivers 1210 and 1212. In some embodiments, measurements of signals received (transmitted) by UE 1200 may be performed at the point of connection of the UE antenna 1211 and wireless transceivers 1210 and 1212. For example, the measurement point of reference for received (transmitted) RF signal measurements may be an input (output) terminal of the receiver 1210r (transmitter 1210t) and an output (input) terminal of the UE antenna 1211. In a UE 1200 with multiple UE antennas 1211 or antenna arrays, the antenna connector may be viewed as a virtual point representing the aggregate output (input) of multiple UE antennas. In some embodiments, UE 1200 may measure received signals including signal strength and TOA measurements, and angle related measurements for DL PRS and/or SL PRS and the raw measurements may be processed by the one or more processors 1202.

The one or more processors 1202 may be implemented using a combination of hardware, firmware, and software. For example, the one or more processors 1202 may be configured to perform the functions discussed herein by implementing one or more instructions or program code 1208 on a non-transitory computer readable medium, such as medium 1220 and/or memory 1204. In some embodiments, the one or more processors 1202 may represent one or more circuits configurable to perform at least a portion of a data signal computing procedure or process related to the operation of UE 1200.

The medium 1220 and/or memory 1204 may store instructions or program code 1208 that contain executable code or software instructions that when executed by the one or more processors 1202 cause the one or more processors 1202 to operate as a special purpose computer programmed to perform the techniques disclosed herein. As illustrated in UE 1200, the medium 1220 and/or memory 1204 may include one or more components or modules that may be implemented by the one or more processors 1202 to perform the methodologies described herein. While the components or modules are illustrated as software in medium 1220 that is executable by the one or more processors 1202, it should be understood that the components or modules may be stored in memory 1204 or may be dedicated hardware either in the one or more processors 1202 or off the processors.

A number of software modules and data tables may reside in the medium 1220 and/or memory 1204 and be utilized by the one or more processors 1202 in order to manage both communications and the functionality described herein. It should be appreciated that the organization of the contents of the medium 1220 and/or memory 1204 as shown in UE 1200 is merely exemplary, and as such the functionality of the modules and/or data structures may be combined, separated, and/or be structured in different ways depending upon the implementation of the UE 1200.

The medium 1220 and/or memory 1204 may include a predicted values module 1222 that when implemented by the one or more processors 1202 configures the one or more processors 1202 to receive, via the wireless transceiver 1210, one or more predicted values for one or more measurements of downlink reference signals based on measurements of previous downlink reference signals received from the base station. The predicted values for the one or more measurements, for example, may include a security set of predicted values for the one or more measurements for determining if the attacking device transmitted the received downlink reference signals and an assistance data set of predicted values for the one or more measurements for determining used for performing the one or more measurements of the received downlink reference signals. The predicted values include a predicted velocity of the UE in accordance with the independent claims. In addition, the predicted values may be predicted positioning measurement values, such as one or more expected RSRP values; RSTD values, expected RSTD uncertainty, or a combination thereof; expected AoA values expected AoA uncertainty, or a combination thereof, expected RTT values, etc. The predicted values may be one or more predicted channel coefficients for pairs of Tx-Rx antennas or antenna ports. The one or more processors 1202 may be further configured to receive, via the wireless transceiver 1210, one or more time stamps associated with the predicted values for the one or more measurements of downlink reference signals.

The medium 1220 and/or memory 1204 may include a reference signal module 1224 that when implemented by the one or more processors 1202 configures the one or more processors 1202 to receive, via the wireless transceiver 1210, downlink reference signals, such as PRS. The downlink reference signals may be received from an authenticated base station, such as base station 102, or may be received from an intervening device, such as attacking device 912.

The medium 1220 and/or memory 1204 may include a measurement module 1226 that when implemented by the one or more processors 1202 configures the one or more processors 1202 to measure the received downlink reference signals. For example, the one or more processors 1202 may be configured to perform positioning measurements RSRP, RSTD, AOA, RTT, etc., as well as measurements of channel coefficients, velocity (in accordance with the independent claims), direction of travel, or a combination thereof.

The medium 1220 and/or memory 1204 may include a comparison module 1228 that when implemented by the one or more processors 1202 configures the one or more processors 1202 to determine if an attacking device transmitted the received downlink reference signals based on the one or more predicted values for one or more measurements of downlink reference signals and the one or more measurements of the current downlink reference signals, e.g., by comparing the measured values for current downlink reference signals to the predicted values for downlink reference signals. The one or more processors 1202 may be configured to determine whether the difference between the predicted and actual measurement values are within an acceptable error, which may be provided to the UE with the predicted values or may be determined by the one or more processors 1202 based on time stamps associated with the predicted values and the time of receiving the current downlink reference signals. The one or more processors 1202 may be configured to compare predicted and actual values for velocity of the UE, as well as optionally also positioning measurements, such as RSRP, RSTD, AOA, RTT, etc., as well as channel coefficients, velocity, direction of travel, or a combination thereof.

The medium 1220 and/or memory 1204 may include a report module 1230 that when implemented by the one or more processors 1202 configures the one or more processors 1202 to send, via the transceiver 1210, a report to the base station indicating a presence of the attacking device in the connection between the UE and the base station if the received downlink reference signals are determined to be transmitted by the attacking device. The UE, for example, may send the report to one of the base station or a location server.

The methodologies described herein may be implemented by various means depending upon the application. For example, these methodologies may be implemented in hardware, firmware, software, or any combination thereof. For a hardware implementation, the one or more processors 1202 may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1220 or memory 1204 that is connected to and executed by the one or more processors 1202. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1208 on a non-transitory computer readable medium, such as medium 1220 and/or memory 1204. Examples include computer readable media encoded with a data structure and computer readable media encoded with a computer program 1208. For example, the non-transitory computer readable medium including program code 1208 stored thereon may include program code 1208 to support authentication of a connection with a base station and identification of the presence of an intervening device between the UE and a base station, as described herein in a manner consistent with disclosed embodiments. Non-transitory computer readable medium 1220 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1208 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1220, instructions and/or data may be provided as signals on transmission media included in a communication apparatus. For example, a communication apparatus may include a wireless transceiver 1210 having signals indicative of instructions and data. The instructions and data are configured to cause one or more processors to implement the functions outlined in the claims. That is, the communication apparatus includes transmission media with signals indicative of information to perform disclosed functions.

Memory 1204 may represent any data storage mechanism. Memory 1204 may include, for example, a primary memory and/or a secondary memory. Primary memory may include, for example, a random access memory, read only memory, etc. While illustrated in this example as being separate from one or more processors 1202, it should be understood that all or part of a primary memory may be provided within or otherwise co-located/coupled with the one or more processors 1202. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1220. As such, in certain example implementations, the methods and/or apparatuses presented herein may take the form in whole or part of a computer readable medium 1220 that may include computer implementable code 1208 stored thereon, which if executed by one or more processors 1202 may be operatively enabled to perform all or portions of the example operations as described herein. Computer readable medium 1220 may be a part of memory 1204.

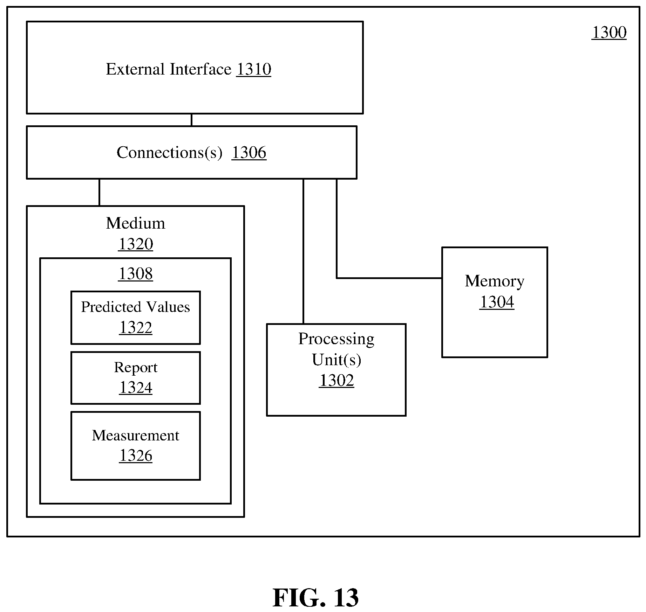

**FIG. 13** shows a schematic block diagram illustrating certain exemplary features of a network entity 1300, e.g., base station 102 or location server 172, shown in FIG. 1, that is configured to support authentication of a connection between a UE and a base station and identification of the presence of an intervening device between the UE and the base station, e.g., as discussed herein. The network entity 1300 may perform the signaling flow shown in FIG. 11 and the process flow 1500 shown in FIG. 15 and algorithms disclosed herein. Network entity 1300 may, for example, include one or more processors 1302, memory 1304, an external interface 1310 (e.g., wireline or wireless network interface to base stations and/or entities in the core network if the network entity 1300 is a location server or a wireless transceiver for communication to UEs and a wireline or wireless network interface to a location server and/or other entities in the core network if the network entity 1300 is a base station), which may be operatively coupled with one or more connections 1306 (e.g., buses, lines, fibers, links, etc.) to non-transitory computer readable medium 1320 and memory 1304. In certain example implementations, all or part of network entity 1300 may take the form of a chipset, and/or the like.

The one or more processors 1302 may be implemented using a combination of hardware, firmware, and software. For example, the one or more processors 1302 may be configured to perform the functions discussed herein by implementing one or more instructions or program code 1308 on a non-transitory computer readable medium, such as medium 1320 and/or memory 1304. In some embodiments, the one or more processors 1302 may represent one or more circuits configurable to perform at least a portion of a data signal computing procedure or process related to the operation of network entity 1300.

The medium 1320 and/or memory 1304 may store instructions or program code 1308 that contain executable code or software instructions that when executed by the one or more processors 1302 cause the one or more processors 1302 to operate as a special purpose computer programmed to perform the techniques disclosed herein. As illustrated in network entity 1300, the medium 1320 and/or memory 1304 may include one or more components or modules that may be implemented by the one or more processors 1302 to perform the methodologies described herein. While the components or modules are illustrated as software in medium 1320 that is executable by the one or more processors 1302, it should be understood that the components or modules may be stored in memory 1304 or may be dedicated hardware either in the one or more processors 1302 or off the processors.

A number of software modules and data tables may reside in the medium 1320 and/or memory 1304 and be utilized by the one or more processors 1302 in order to manage both communications and the functionality described herein. It should be appreciated that the organization of the contents of the medium 1320 and/or memory 1304 as shown in network entity 1300 is merely exemplary, and as such the functionality of the modules and/or data structures may be combined, separated, and/or be structured in different ways depending upon the implementation of the network entity 1300.

The medium 1320 and/or memory 1304 may include a predicted values module 1322 that when implemented by the one or more processors 1302 configures the one or more processors 1302 to obtain one or more predicted values for one or more measurements of downlink reference signals to be performed by the UE based on previous measurements performed by the UE of downlink reference signals received by the UE from the base station. For example, the one or more predicted values may include a security set of predicted values for the one or more measurements for determining if the attacking device transmitted the received downlink reference signals and an assistance data set of predicted values for the one or more measurements for determining used for performing the one or more measurements of the received downlink reference signals. The one or more processors 1302 may be configured to generate the one or more predicted values based on a plurality of measurements received from the UE, e.g., based on an average, weighted average, or other statistical combination of measurements. In other implementations, the one or more processors 1302 may be configured to receive the predicted values from another entity, such as the location server when the network entity 1300 is a base station. The one or more processors 1302 may be configured to send, via the external interface, the one or more predicted values for the one or more measurements of downlink reference signals to the UE. The one or more processors 1302 may be configured to update the one or more predicted values based on additional measurements received from the UE. The predicted values may be predicted positioning measurement values, such as one or more expected RSRP values; RSTD values, expected RSTD uncertainty, or a combination thereof; expected AoA values expected AoA uncertainty, or a combination thereof, expected RTT values, etc. The predicted values include velocity of the UE and may also include one or more predicted channel coefficients for pairs of Tx-Rx antennas or antenna ports.

The medium 1320 and/or memory 1304 may include a report module 1324 that when implemented by the one or more processors 1302 configures the one or more processors 1302 to receive, via the external interface 1310, an indication of whether an attacking device is present in the connection between the UE and the base station based on one or more measurements performed by the UE for current downlink reference signals received by the UE and the one or more predicted values for the one or more measurements of downlink reference signals to the UE. The indication, for example, may be a report providing one or more measurements performed by the UE for the current downlink reference signals received by the UE, which may be used to determine or validate by the one or more processors 1302 that an attacking device is present. In another example, the indication may be a warning flag that indicates the presence of an attacking device.

The medium 1320 and/or memory 1304 may include a measurement module 1326 that when implemented by the one or more processors 1302 configures the one or more processors 1302 to receive, via the external interface 1310, a plurality of one or more measurements performed by the UE of downlink reference signals transmitted by the base station, which may be used to update the predicted values of measurements, e.g., if an attacking device is determined not to be present.

The methodologies described herein may be implemented by various means depending upon the application. For example, these methodologies may be implemented in hardware, firmware, software, or any combination thereof. For a hardware implementation, the one or more processors 1302 may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine readable medium tangibly embodying instructions may be used in implementing the methodologies described herein. For example, software codes may be stored in a non-transitory computer readable medium 1320 or memory 1304 that is connected to and executed by the one or more processors 1302. Memory may be implemented within the one or more processors or external to the one or more processors. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or program code 1308 on a non-transitory computer readable medium, such as medium 1320 and/or memory 1304. Examples include computer readable media encoded with a data structure and computer readable media encoded with a computer program 1308. For example, the non-transitory computer readable medium including program code 1308 stored thereon may include program code 1308 to support authentication of a connection between a UE and a base station and identification of the presence of an intervening device between the UE and the base station in a manner consistent with disclosed embodiments. Non-transitory computer readable medium 1320 includes physical computer storage media. A storage medium may be any available medium that can be accessed by a computer. By way of example, and not limitation, such non-transitory computer readable media can comprise RAM, ROM, EEPROM, CD-ROM or other optical disk storage, magnetic disk storage or other magnetic storage devices, or any other medium that can be used to store desired program code 1308 in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer readable media.

In addition to storage on computer readable medium 1320, instructions and/or data may be provided as signals on transmission media included in a communication apparatus. For example, a communication apparatus may include an external interface 1310 having signals indicative of instructions and data. The instructions and data are configured to cause one or more processors to implement the functions outlined in the claims. That is, the communication apparatus includes transmission media with signals indicative of information to perform disclosed functions.

Memory 1304 may represent any data storage mechanism. Memory 1304 may include, for example, a primary memory and/or a secondary memory. Primary memory may include, for example, a random access memory, read only memory, etc. While illustrated in this example as being separate from one or more processors 1302, it should be understood that all or part of a primary memory may be provided within or otherwise co-located/coupled with the one or more processors 1302. Secondary memory may include, for example, the same or similar type of memory as primary memory and/or one or more data storage devices or systems, such as, for example, a disk drive, an optical disc drive, a tape drive, a solid state memory drive, etc.

In certain implementations, secondary memory may be operatively receptive of, or otherwise configurable to couple to a non-transitory computer readable medium 1320. As such, in certain example implementations, the methods and/or apparatuses presented herein may take the form in whole or part of a computer readable medium 1320 that may include computer implementable code 1308 stored thereon, which if executed by one or more processors 1302 may be operatively enabled to perform all or portions of the example operations as described herein. Computer readable medium 1320 may be a part of memory 1304.

**FIG. 14** shows a flow diagram for an exemplary method 1400 performed by a UE for authenticating a connection with a base station. The UE, for example, may be UE 104 or UE 1200, and the base station may be, e.g., base station 102 or network entity 1300.

At block 1402, the UE receives one or more predicted values for one or more measurements of downlink reference signals based on measurements of previous downlink reference signals received from the base station, e.g., as discussed at stages 1112 and 1122 of FIG. 11. The downlink reference signals, for example, may be positioning reference signals (PRS). In some implementations, the one or more predicted values for the one or more measurements comprise a security set of predicted values for the one or more measurements for determining if the attacking device transmitted the received downlink reference signals and an assistance data set of predicted values for the one or more measurements for performing the one or more measurements of the received downlink reference signals, e.g., as discussed at stages 1112 and 1122 of FIG. 11. A means for receiving one or more predicted values for one or more measurements of downlink reference signals based on measurements of previous downlink reference signals received from the base station may include, e.g., the wireless transceiver 1210 and one or more processors 1202 with dedicated hardware or implementing executable code or software instructions in memory 1204 and/or medium 1220 in UE 1200, such as the predicted values module 1222, shown in FIG. 12.

At block 1404, UE receives downlink reference signals, e.g., as discussed at stages 1114 and 1124 of FIG. 11. A means for receiving downlink reference signals may include, e.g., the wireless transceiver 1210 and one or more processors 1202 with dedicated hardware or implementing executable code or software instructions in memory 1204 and/or medium 1220 in UE 1200, such as the reference signal module 1224, shown in FIG. 12.

At block 1406, the UE performs one or more measurements of the received downlink reference signals, e.g., as discussed at stages 1115 and 1125 of FIG. 11. A means for performing one or more measurements of the received downlink reference signals may include, e.g., the one or more processors 1202 with dedicated hardware or implementing executable code or software instructions in memory 1204 and/or medium 1220 in UE 1200, such as the measurement module 1226, shown in FIG. 12.

At block 1408, the UE determines whether an attacking device transmitted the received downlink reference signals based on the one or more predicted values for one or more measurements of downlink reference signals and the one or more measurements of the current downlink reference signals, e.g., as discussed at stages 1116 and 1126 of FIG. 11. A means for determining if an attacking device transmitted the received downlink reference signals based on the one or more predicted values for one or more measurements of downlink reference signals and the one or more measurements of the current downlink reference signals may include, e.g., the one or more processors 1202 with dedicated hardware or implementing executable code or software instructions in memory 1204 and/or medium 1220 in UE 1200, such as the comparison module 1228, shown in FIG. 12.

In some implementations, the UE may send a report to a network entity indicating a presence of the attacking device in the connection between the UE and the base station in response to a determination that the received downlink reference signals are transmitted by the attacking device, e.g., as discussed at stage 1128 of FIG. 11. The UE, for example, may send the report to a network entity that may be one of the base station or a location server. A means for sending a report to a network entity indicating a presence of the attacking device in the connection between the UE and the base station in response to a determination that the received downlink reference signals are transmitted by the attacking device may include, e.g., the wireless transceiver 1210 and one or more processors 1202 with dedicated hardware or implementing executable code or software instructions in memory 1204 and/or medium 1220 in UE 1200, such as the report module 1230, shown in FIG. 12.

In some implementations, the one or more predicted values for one or more measurements of downlink reference signals may be predicted positioning measurement values. For example, the one or more predicted values for one or more measurements of downlink reference signals comprises one or more expected Reference Signal Received Power (RSRP) values for the downlink reference signals, e.g. as discussed at stages 1110 and 1112 of FIG. 11. In another example, the one or more predicted values for one or more measurements of downlink reference signals comprises at least one of one or more expected Reference Signal Time Difference (RSTD) values for the downlink reference signals received from the base station with respect to downlink reference signals received from one or more other base stations, one or more expected RSTD uncertainty, or a combination thereof, e.g. as discussed at stages 1110 and 1112 of FIG. 11. In another example, the one or more predicted values for one or more measurements of downlink reference signals comprises one or more expected Angle of Arrival (AoA) values for the downlink reference signals, one or more expected AoA uncertainty, or a combination thereof, e.g. as discussed at stages 1110 and 1112 of FIG. 11. In another example, the one or more predicted values for one or more measurements of downlink reference signals comprises one or more expected Round Trip Time (RTT) values for the base station, e.g. as discussed at stages 1110 and 1112 of FIG. 11.

In some implementations, the UE may further receive one or more predicted channel coefficients for pairs of Tx-Rx antennas or antenna ports based on measurements of previous downlink reference signals received from the base station, e.g., as discussed at stages 1110 and 1112 of FIG. 11, and may determine current channel coefficients from the received downlink reference signals, e.g., as discussed at stages 1115 and 1125 of FIG. 11. The L1E may determine if the attacking device transmitted the received downlink reference signals further based on the predicted channel coefficients and the current channel coefficients, as discussed at stages 1116 and 1126 of FIG. 11. A means for receiving one or more predicted channel coefficients for pairs of Tx-Rx antennas or antenna ports based on measurements of previous downlink reference signals received from the base station may include, e.g., the wireless transceiver 1210 and one or more processors 1202 with dedicated hardware or implementing executable code or software instructions in memory 1204 and/or medium 1220 in UE 1200, such as the predicted values module 1222, shown in FIG. 12. A means for determining current channel coefficients from the received downlink reference signals may include, e.g., the one or more processors 1202 with dedicated hardware or implementing executable code or software instructions in memory 1204 and/or medium 1220 in UE 1200, such as the measurement module 1226, shown in FIG. 12.

In accordance with the independent claims, the UE further receives a predicted velocity of the UE based on measurements of previous downlink reference signals received from the base station, e.g., as discussed at stages 1110 and 1112 of FIG. 11, and determines a current velocity from the received downlink reference signals, e.g., as discussed at stages 1115 and 1125 of FIG. 11. The UE determines if the attacking device transmitted the received downlink reference signals based on the predicted velocity and the current velocity, e.g., as discussed at stages 1116 and 1126 of FIG. 11. A means for receiving a predicted velocity based on measurements of previous downlink reference signals received from the base station may include, e.g., the wireless transceiver 1210 and one or more processors 1202 with dedicated hardware or implementing executable code or software instructions in memory 1204 and/or medium 1220 in UE 1200, such as the predicted values module 1222, shown in FIG. 12. A means for determining a current velocity from the received downlink reference signals may include, e.g., the one or more processors 1202 with dedicated hardware or implementing executable code or software instructions in memory 1204 and/or medium 1220 in UE 1200, such as the measurement module 1226, shown in FIG. 12.

In some implementations, the UE may further receive one or more time stamps associated with the predicted values for the one or more measurements of downlink reference signals, e.g., as discussed at stages 1110 and 1112. A means for receiving one or more time stamps associated with the predicted values for the one or more measurements of downlink reference signals may include, e.g., the wireless transceiver 1210 and one or more processors 1202 with dedicated hardware or implementing executable code or software instructions in memory 1204 and/or medium 1220 in UE 1200, such as the predicted values module 1222, shown in FIG. 12.

FIG. 15 shows a flow diagram for an exemplary method 1500 performed by a network entity for authenticating a connection between a UE and a base station. The network entity, for example, may be the base station 102, location server 172, or network entity 1300 and the UE may be UE 104 or UE 1200.

At block 1502, the network entity obtains one or more predicted values for one or more measurements of downlink reference signals to be performed by the UE based on previous measurements performed by the UE of downlink reference signals received by the UE from the base station, e.g., as discussed at stages 1104, 1108, and 1118 of FIG. 11. The downlink reference signals, for example, may be positioning reference signals (PRS). In some implementations, the one or more predicted values for the one or more measurements comprise a security set of predicted values for the one or more measurements for determining if the attacking device transmitted the received downlink reference signals and an assistance data set of predicted values for the one or more measurements for performing the one or more measurements of the received downlink reference signals, e.g., as discussed at stages 1112 and 1122 of FIG. 11. A means for obtaining one or more predicted values for one or more measurements of downlink reference signals to be performed by the UE based on previous measurements performed by the UE of downlink reference signals received by the UE from the base station may include, e.g., the external interface 1310 and one or more processors 1302 with dedicated hardware or implementing executable code or software instructions in memory 1304 and/or medium 1320 in the network entity 1300, such as the predicted values module 1322, shown in FIG. 13.

At block 1504, the network entity sends the one or more predicted values for the one or more measurements of downlink reference signals to the UE, e.g. as discussed at stages 1112 and 1122 of FIG. 11. A means for sending the one or more predicted values for the one or more measurements of downlink reference signals to the UE may include, e.g., the external interface 1310 and one or more processors 1302 with dedicated hardware or implementing executable code or software instructions in memory 1304 and/or medium 1320 in the network entity 1300, such as the predicted values module 1322, shown in FIG. 13.

At block 1506, the network entity receives an indication of whether an attacking device is present in the connection between the UE and the base station based on one or more measurements performed by the UE for current downlink reference signals received by the UE and the one or more predicted values for the one or more measurements of downlink reference signals to the UE, e.g., as discussed at stages 1118 and 1128 of FIG. 11. A means for receiving an indication of whether an attacking device is present in the connection between the UE and the base station based on one or more measurements performed by the UE for current downlink reference signals received by the UE and the one or more predicted values for the one or more measurements of downlink reference signals to the UE may include, e.g., the external interface 1310 and one or more processors 1302 with dedicated hardware or implementing executable code or software instructions in memory 1304 and/or medium 1320 in the network entity 1300, such as the report module 1324, shown in FIG. 13.

In one implementation, the network entity may obtain the one or more predicted values for the one or more measurements of downlink reference signals to be performed by the UE by receiving a plurality of one or more measurements performed by the UE of downlink reference signals transmitted by the base station, e.g., as discussed at stages 1108 and 1118 of FIG. 11, and generating the one or more predicted values for the one or more measurements of the downlink reference signals based on received plurality of the one or more measurements performed by the UE, e.g., as discussed at stages 1110 and 1120 of FIG. 11. A means for receiving a plurality of one or more measurements performed by the UE of downlink reference signals transmitted by the base station may include, e.g., the external interface 1310 and one or more processors 1302 with dedicated hardware or implementing executable code or software instructions in memory 1304 and/or medium 1320 in the network entity 1300, such as the measurement module 1326, shown in FIG. 13. A means for generating the one or more predicted values for the one or more measurements of the downlink reference signals based on received plurality of the one or more measurements performed by the UE may include, e.g., the one or more processors 1302 with dedicated hardware or implementing executable code or software instructions in memory 1304 and/or medium 1320 in the network entity 1300, such as the predicted values module 1322, shown in FIG. 13.

In one implementation, the network entity may obtain the one or more predicted values for the one or more measurements of downlink reference signals to be performed by the UE by receiving the one or more predicted values from a location server, e.g., as discussed at stages 1110 and 1120 of FIG. 11. A means for receiving the one or more predicted values from a location server may include, e.g., the external interface 1310 and one or more processors 1302 with dedicated hardware or implementing executable code or software instructions in memory 1304 and/or medium 1320 in the network entity 1300, such as the predicted values module 1322, shown in FIG. 13.

In one implementation, the indication of whether the attacking device is present may comprises a report indicating the attacking device has been detected by the UE, as discussed at stage 1128 of FIG. 11. In one implementation, the indication of whether the attacking device is present comprises a report providing the one or more measurements performed by the UE for the current downlink reference signals received by the UE, e.g. as discussed at stage 1118 or stage 1128 of FIG. 11. The network entity, for example, may update the one or more predicted values for the one or more measurements of downlink reference signals to be performed by the UE based on the one or more measurements performed by the UE for the current downlink reference signals, e.g., as discussed at stages 1120 and 1122 of FIG. 11. A means for updating the one or more predicted values for the one or more measurements of downlink reference signals to be performed by the UE based on the one or more measurements performed by the UE for the current downlink reference signals may include, e.g., the external interface 1310 and one or more processors 1302 with dedicated hardware or implementing executable code or software instructions in memory 1304 and/or medium 1320 in the network entity 1300, such as the predicted values module 1322, shown in FIG. 13.

In some implementations, the one or more predicted values for one or more measurements of downlink reference signals may be predicted positioning measurement values. For example, the one or more predicted values for one or more measurements of downlink reference signals comprises one or more expected Reference Signal Received Power (RSRP) values for the downlink reference signals, e.g. as discussed at stages 1110 and 1112 of FIG. 11. In another example, the one or more predicted values for one or more measurements of downlink reference signals comprises at least one of one or more expected Reference Signal Time Difference (RSTD) values for the downlink reference signals from the base station with respect to downlink reference signals from one or more other base stations, one or more expected RSTD uncertainty, or a combination thereof, e.g. as discussed at stages 1110 and 1112 of FIG. 11. In another example, the one or more predicted values for one or more measurements of downlink reference signals comprises one or more expected Angle of Arrival (AoA) values for the downlink reference signals, one or more expected AoA uncertainty, or a combination thereof, e.g. as discussed at stages 1110 and 1112 of FIG. 11. In another example, the one or more predicted values for one or more measurements of downlink reference signals comprises one or more expected Round Trip Time (RTT) values for the base station, e.g. as discussed at stages 1110 and 1112 of FIG. 11.

In some implementations the one or more predicted values for one or more measurements of downlink reference signals comprises predicted channel coefficients for pairs of Tx-Rx antennas or antenna ports, e.g., as discussed at stages 1110 and 1112 of FIG. 11. In accordance with the independent claims, the one or more predicted values for one or more measurements of downlink reference signals comprise a velocity of the UE, e.g., as discussed at stages 1110 and 1112 of FIG. 11.

It will be apparent to those skilled in the art that substantial variations may be made in accordance with specific requirements. For example, customized hardware might also be used and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media and volatile media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

Having described several embodiments, various modifications, alternative constructions, and equivalents may be used. For example, the above elements may merely be a component of a larger system, wherein other rules may take precedence over or otherwise modify the application of the various embodiments. Also, a number of steps may be undertaken before, during, or after the above elements are considered. Accordingly, the above description does not limit the scope of the disclosure.

## Claims

1. A method performed by a user equipment (UE) for authenticating a connection with a base station, the method comprising:

   receiving (1402), from a network entity (102, 172), one or more predicted values (1112) for one or more measurements of downlink reference signals based on measurements performed by the UE of previous downlink reference signals received from the base station (102), wherein the one or more predicted values comprise a predicted velocity of the UE based on measurements performed by the UE of previous downlink reference signals received from the base station;
   receiving (1404) downlink reference signals (1114);
   performing (1406) one or more measurements (1115) of the received downlink reference signals including determining a current velocity of the UE based on the received downlink reference signals; and
   determining (1408) whether an attacking device (912) transmitted the received downlink reference signals (1114) based on the one or more predicted values for one or more measurements of downlink reference signals and the one or more measurements of the current downlink reference signals, which includes comparing (1126) the predicted velocity of the UE to the determined current velocity of the UE.

2. The method of claim 1, further comprising receiving one or more time stamps associated with the predicted values for the one or more measurements of downlink reference signals,

wherein determining whether an attacking device transmitted the received downlink reference signals (1114) comprises determining whether a difference between the predicted velocity of the UE and the determined current velocity of the UE is within a threshold,
wherein the threshold is based at least partly on time elapsed between a time stamp associated with the predicted values and a time of receipt of the downlink reference signals.

3. The method of claim 1, wherein the downlink reference signals are downlink positioning reference signals.

4. The method of claim 1, further comprising sending a report (1128) to the network entity (102, 172) indicating a presence of the attacking device (912) in the connection between the UE and the base station (102) in response to a determination that the received downlink reference signals (1114) are transmitted by the attacking device, wherein the network entity is the base station (102) or a location server (172).

5. The method of claim 1, wherein the one or more predicted values (1112) for the one or more measurements comprise a security set of predicted values for the one or more measurements for determining if the attacking device transmitted the received downlink reference signals (1114) and an assistance data set of predicted values for the one or more measurements for performing the one or more measurements of the received downlink reference signals (1114).

6. The method of claim 1, wherein the one or more predicted values (1112) for one or more measurements of downlink reference signals further comprise one or more expected Reference Signal Received Power (RSRP) values for the downlink reference signals (1114).

7. The method of claim 1, wherein the one or more predicted values (1112) for one or more measurements of downlink reference signals further comprise at least one of: one or more expected Reference Signal Time Difference (RSTD) values for the downlink reference signals (1114) received from the base station with respect to downlink reference signals received from one or more other base stations, one or more expected RSTD uncertainties, or a combination thereof.

8. The method of claim 1, wherein the one or more predicted values (1112) for one or more measurements of downlink reference signals further comprise: one or more expected Angle of Arrival (AoA) values for the downlink reference signals, one or more expected AoA uncertainties, or a combination thereof.

9. The method of claim 1, wherein the one or more predicted values (1112) for one or more measurements of downlink reference signals further comprise one or more expected Round Trip Time (RTT) values for the base station.

10. The method of claim 1, further comprising:

receiving one or more predicted channel coefficients for pairs of Tx-Rx antennas or antenna ports based on measurements of previous downlink reference signals received from the base station; and
determining current channel coefficients from the received downlink reference signals;
wherein determining (1408) if the attacking device (912) transmitted the received downlink reference signals (1114) is further based on the predicted channel coefficients and the current channel coefficients.

11. A user equipment (UE) configured for authenticating a connection with a base station, comprising:

a wireless transceiver configured to communicate with other entities in the wireless network;
at least one memory; and
at least one processor coupled to the wireless transceiver and the at least one memory and configured to:

receive (1402), from a network entity (102, 172) via the wireless transceiver, one or more predicted values (1112) for one or more measurements of downlink reference signals based on measurements performed by the UE of previous downlink reference signals received from the base station (102), wherein the one or more predicted values comprise a predicted velocity of the UE based on measurements performed by the UE of previous downlink reference signals received from the base station;
receive (1404), via the wireless transceiver, downlink reference signals (1114);

perform (1406) one or more measurements (1115) of the received downlink reference signals including determining a current velocity of the UE based on the received downlink reference signals; and
determine (1408) whether an attacking device (912) transmitted the received downlink reference signals (1114) based on the one or more predicted values for one or more measurements of downlink reference signals and the one or more measurements of the current downlink reference signals, which includes comparing (1126) the predicted velocity of the UE to the determined current velocity of the UE.

12. The UE of claim 11, wherein the at least one processor is further configured to:

receive, via the wireless transceiver, one or more predicted channel coefficients for pairs of Tx-Rx antennas or antenna ports based on measurements of previous downlink reference signals received from the base station; and
determine current channel coefficients from the received downlink reference signals;
wherein the at least one processor is configured to determine if the attacking device transmitted the received downlink reference signals further based on the predicted channel coefficients and the current channel coefficients.

13. The UE of claim 11, wherein the at least one processor is further configured to receive one or more time stamps associated with the predicted values for the one or more measurements of downlink reference signals,

wherein determining whether an attacking device transmitted the received downlink reference signals comprises determining whether a difference between the predicted velocity of the UE and the determined current velocity of the UE is within a threshold,
wherein the threshold is based at least partly on time elapsed between a time stamp associated with the predicted values and a time of receipt of the downlink reference signals.

14. The UE of claim 11, wherein the downlink reference signals are downlink positioning reference signals.

15. The UE of claim 11, wherein the at least one processor is further configured to send a report (1128) to the network entity (102, 172) indicating a presence of the attacking device (912) in the connection between the UE and the base station (102) in response to a determination that the received downlink reference signals are transmitted by the attacking device, wherein the network entity is the base station (102) or a location server (172).

16. The UE of claim 11, wherein the one or more predicted values (1112) for one or more measurements of downlink reference signals further comprise one or more expected Reference Signal Received Power (RSRP) values for the downlink reference signals (1114).

**Patentansprüche**

1. Verfahren, durchgeführt von einem UE (User Equipment) zum Authentifizieren einer Verbindung mit einer Basisstation, wobei das Verfahren Folgendes beinhaltet:

Empfangen (1402), von einer Netzwerkentität (102, 172), eines oder mehrerer vorhergesagter Werte (1112) für eine oder mehrere Messungen von Downlink-Referenzsignalen auf der Basis von von dem UE an von der Basisstation (102) empfangenen früheren Downlink-Referenzsignalen durchgeführten Messungen, wobei die ein oder mehreren vorhergesagten Werte eine vorhergesagte Geschwindigkeit des UE auf der Basis von von dem UE an früheren Downlink-Referenzsignalen durchgeführten Messungen umfassen, die von der Basisstation empfangen wurden;
Empfangen (1404) von Downlink-Referenzsignalen (1114);
Durchführen (1406) einer oder mehrerer Messungen (1115) der empfangenen Downlink-Referenzsignale, einschließlich des Bestimmens einer aktuellen Geschwindigkeit des UE auf der Basis der empfangenen Downlink-Referenzsignale; und
Feststellen (1408), ob ein angreifendes Gerät (912) die empfangenen Downlink-Referenzsignale (1114) übertragen hat, auf der Basis der ein oder mehreren vorhergesagten Werte für eine oder mehrere Messungen von Downlink-Referenzsignalen und der ein oder mehreren Messungen der aktuellen Downlink-Referenzsignale, was das Vergleichen (1126) der vorhergesagten Geschwindigkeit des UE mit der bestimmten aktuellen Geschwindigkeit des UE beinhaltet.

**2.** Verfahren nach Anspruch 1, das ferner das Empfangen eines oder mehrerer mit den vorhergesagten Werten für die ein oder mehreren Messungen von Downlink-Referenzsignalen assoziierten Zeitstempel umfasst,

wobei das Feststellen, ob ein angreifendes Gerät die empfangenen Downlink-Referenzsignale (1114) übertragen hat, das Feststellen beinhaltet, ob eine Differenz zwischen der vorhergesagten Geschwindigkeit des UE und der bestimmten aktuellen Geschwindigkeit des UE innerhalb eines Schwellenwerts liegt, wobei der Schwellenwert zumindest teilweise auf der Zeit basiert, die zwischen einem mit den vorhergesagten Werten assoziierten Zeitstempel und einem Zeitpunkt des Empfangs der Downlink-Referenzsignale verstrichen ist.

**3.** Verfahren nach Anspruch 1, wobei die Downlink-Referenzsignale Downlink-Positionsreferenzsignale sind.

**4.** Verfahren nach Anspruch 1, das ferner das Senden eines Berichts (1128) zu der Netzwerkentität (102, 172) beinhaltet, der die Anwesenheit des angreifenden Geräts (912) in der Verbindung zwischen dem UE und der Basisstation (102) als Reaktion auf eine Feststellung anzeigt, dass die empfangenen Downlink-Referenzsignale (1114) von dem angreifenden Gerät übertragen werden, wobei die Netzwerkentität die Basisstation (102) oder ein Standort-Server (172) ist.

**5.** Verfahren nach Anspruch 1, wobei die ein oder mehreren vorhergesagten Werte (1112) für die ein oder mehreren Messungen einen Sicherheitssatz von vorhergesagten Werten für die ein oder mehreren Messungen zum Feststellen, ob das angreifende Gerät die empfangenen Downlink-Referenzsignale (1114) übertragen hat, und einen Assistenzdatensatz von vorhergesagten Werten für die ein oder mehreren Messungen zum Durchführen der ein oder der mehreren Messungen der empfangenen Downlink-Referenzsignale (1114) umfassen.

**6.** Verfahren nach Anspruch 1, wobei die ein oder mehreren vorhergesagten Werte (1112) für eine oder mehrere Messungen von Downlink-Referenzsignalen ferner einen oder mehrere erwartete RSRP-(Reference Signal Received Power)-Werte für die Downlink-Referenzsignale (1114) umfassen.

**7.** Verfahren nach Anspruch 1, wobei die ein oder mehreren vorhergesagten Werte (1112) für eine oder mehrere Messungen von Downlink-Referenzsignalen ferner mindestens eines von: einem oder mehreren erwarteten RSTD-(Reference Signal Time Difference)-Werten für die Downlink-Referenzsignale (1114), die von der Basisstation in Bezug auf von einer oder mehreren anderen Basisstationen empfangene Downlink-Referenzsignale empfangen wurden, einer oder mehreren erwarteten RSTD-Unsicherheiten oder einer Kombination davon umfassen.

**8.** Verfahren nach Anspruch 1, wobei die ein oder mehreren vorhergesagten Werte (1112) für eine oder mehrere Messungen von Downlink-Referenzsignalen ferner einen oder mehrere erwartete AoA-(Angle of Arrival)-Werte für die Downlink-Referenzsignale, eine oder mehrere erwartete AoA-Unsicherheiten oder eine Kombination davon umfassen.

**9.** Verfahren nach Anspruch 1, wobei die ein oder mehreren vorhergesagten Werte (1112) für eine oder mehrere Messungen von Downlink-Referenzsignalen ferner einen oder mehrere erwartete RTT-(Round Trip Time)-Werte für die Basisstation umfassen.

**10.** Verfahren nach Anspruch 1, das ferner Folgendes beinhaltet:

Empfangen eines oder mehrerer vorhergesagter Kanalkoeffizienten für Paare von Tx-Rx-Antennen oder Antennenports auf der Basis von Messungen von von der Basisstation empfangenen früheren Downlink-Referenzsignalen; und
Bestimmen aktueller Kanalkoeffizienten aus den empfangenen Downlink-Referenzsignalen; wobei das Feststellen (1408), ob das angreifende Gerät (912) die empfangenen Downlink-Referenzsignale (1114) übertragen hat, ferner auf den vorhergesagten Kanalkoeffizienten und den aktuellen Kanalkoeffizienten basiert.

**11.** Benutzergerät (UE), konfiguriert zum Authentifizieren einer Verbindung mit einer Basisstation, das Folgendes umfasst:

einen drahtlosen Transceiver, der zum Kommunizieren mit anderen Entitäten im drahtlosen Netzwerk konfiguriert ist;

mindestens einen Speicher; und

mindestens einen Prozessor, der mit dem drahtlosen Transceiver und dem mindestens einen Speicher gekoppelt und konfiguriert ist zum:

Empfangen (1402), von einer Netzwerkentität (102, 172) über den drahtlosen Transceiver, eines oder mehrerer vorhergesagter Werte (1112) für eine oder mehrere Messungen von Downlink-Referenzsignalen auf der Basis von von dem UE an von der Basisstation (102) empfangenen früheren Downlink-Referenzsignalen durchgeführten Messungen, wobei die ein oder mehreren vorhergesagten Werte eine vorhergesagte Geschwindigkeit des UE auf der Basis von von dem UE an früheren Downlink-Referenzsignalen durchgeführten Messungen umfassen, die von der Basisstation empfangen wurden;

Empfangen (1404), über den drahtlosen Transceiver, von Downlink-Referenzsignalen (1114);

Durchführen (1406) einer oder mehrerer Messungen (1115) der empfangenen Downlink-Referenzsignale, einschließlich des Bestimmens einer aktuellen Geschwindigkeit des UE auf der Basis der empfangenen Downlink-Referenzsignale; und

Feststellen (1408), ob ein angreifendes Gerät (912) die empfangenen Downlink-Referenzsignale (1114) übertragen hat, auf der Basis der ein oder mehreren vorhergesagten Werte für eine oder mehrere Messungen von Downlink-Referenzsignalen und der ein oder mehreren Messungen der aktuellen Downlink-Referenzsignale, was das Vergleichen (1126) der vorhergesagten Geschwindigkeit des UE mit der bestimmten aktuellen Geschwindigkeit des UE beinhaltet.

12. UE nach Anspruch 11, wobei der mindestens eine Prozessor ferner konfiguriert ist zum:

Empfangen, über den drahtlosen Transceiver, eines oder mehrerer vorhergesagter Kanalkoeffizienten für Paare von Tx-Rx-Antennen oder Antennenports auf der Basis von Messungen früherer Downlink-Referenzsignale, die von der Basisstation empfangen wurden; und

Bestimmen der aktuellen Kanalkoeffizienten aus den empfangenen Downlink-Referenzsignalen;

wobei der mindestens eine Prozessor konfiguriert ist zum Feststellen, ob das angreifende Gerät die empfangenen Downlink-Referenzsignale übertragen hat, ferner auf der Basis der vorhergesagten Kanalkoeffizienten und der aktuellen Kanalkoeffizienten.

13. UE nach Anspruch 11, wobei der mindestens eine Prozessor ferner zum Empfangen eines oder mehrerer mit den vorhergesagten Werten für die ein oder mehreren Messungen von Downlink-Referenzsignalen assoziierten Zeitstempel konfiguriert ist,

wobei das Feststellen, ob ein angreifendes Gerät die empfangenen Downlink-Referenzsignale übertragen hat, das Feststellen beinhaltet, ob eine Differenz zwischen der vorhergesagten Geschwindigkeit des UE und der bestimmten aktuellen Geschwindigkeit des UE innerhalb eines Schwellenwerts liegt,

wobei der Schwellenwert zumindest teilweise auf der Zeit basiert, die zwischen einem mit den vorhergesagten Werten assoziierten Zeitstempel und einem Zeitpunkt des Empfangs der Downlink-Referenzsignale verstrichen ist.

14. UE nach Anspruch 11, wobei die Downlink-Referenzsignale Downlink-Positionsreferenzsignale sind.

15. UE nach Anspruch 11, wobei der mindestens eine Prozessor ferner zum Senden eines Berichts (1128) zu der Netzwerkentität (102, 172) konfiguriert ist, der die Anwesenheit des angreifenden Geräts (912) in der Verbindung zwischen dem UE und der Basisstation (102) anzeigt, als Reaktion auf eine Feststellung, dass die empfangenen Downlink-Referenzsignale von dem angreifenden Gerät übertragen werden, wobei die Netzwerkentität die Basisstation (102) oder ein Standort-Server (172) ist.

16. UE nach Anspruch 11, wobei die ein oder mehreren vorhergesagten Werte (1112) für eine oder mehrere Messungen von Downlink-Referenzsignalen ferner einen oder mehrere erwartete RSRP-(Reference Signal Received Power)-Werte für die Downlink-Referenzsignale (1114) umfassen.

**Revendications**

1. Procédé réalisé par un équipement utilisateur (UE) pour authentifier une connexion avec une station de base, le procédé comprenant :

la réception (1402), à partir d'une entité de réseau (102, 172), d'une ou plusieurs valeurs prédites (1112) pour une ou plusieurs mesures de signaux de référence de liaison descendante basées sur des mesures réalisées par l'UE de signaux de référence de liaison descendante précédents reçus à partir de la station de base (102), dans lequel les une ou plusieurs valeurs prédites comprennent une vélocité prédite de l'UE sur la base de mesures réalisées par l'UE de signaux de référence de liaison descendante précédents reçus à partir de la station de base ;

la réception (1404) de signaux de référence de liaison descendante (1114) ;

la réalisation (1406) d'une ou plusieurs mesures (1115) des signaux de référence de liaison descendante reçus comportant la détermination d'une vélocité actuelle de l'UE sur la base des signaux de référence de liaison descendante reçus ; et

la détermination (1408) qu'un dispositif d'attaque (912) a émis ou non les signaux de référence de liaison descendante reçus (1114) sur la base des une ou plusieurs valeurs prédites pour une ou plusieurs mesures de signaux de référence de liaison descendante et des une ou plusieurs mesures des signaux de référence de liaison descendante actuels, laquelle comporte la comparaison (1126) de la vélocité prédite de l'UE à la vélocité actuelle déterminée de l'UE.

2. Procédé selon la revendication 1, comprenant en outre la réception d'un ou plusieurs horodatages associés aux valeurs prédites pour les une ou plusieurs mesures de signaux de référence de liaison descendante,

dans lequel la détermination qu'un dispositif d'attaque a émis ou non les signaux de référence de liaison descendante reçus (1114) comprend la détermination qu'une différence entre la vélocité prédite de l'UE et la vélocité actuelle déterminée de l'UE est en-deçà d'un seuil,

dans lequel le seuil est basé au moins en partie sur le temps écoulé entre un horodatage associé aux valeurs prédites et un temps de réception des signaux de référence de liaison descendante.

3. Procédé selon la revendication 1, dans lequel les signaux de référence de liaison descendante sont des signaux de référence de positionnement de liaison descendante.

4. Procédé selon la revendication 1, comprenant en outre l'envoi d'un rapport (1128) à l'entité de réseau (102, 172) indiquant une présence du dispositif d'attaque (912) dans la connexion entre l'UE et la station de base (102) en réponse à une détermination que les signaux de référence de liaison descendante reçus (1114) sont émis par le dispositif d'attaque, dans lequel l'entité de réseau est la station de base (102) ou un serveur de localisation (172).

5. Procédé selon la revendication 1, dans lequel les une ou plusieurs valeurs prédites (1112) pour les une ou plusieurs mesures comprennent un ensemble de sécurité de valeurs prédites pour les une ou plusieurs mesures pour déterminer que le dispositif d'attaque a émis ou non les signaux de référence de liaison descendante reçus (1114) et un ensemble de données d'assistance de valeurs prédites pour les une ou plusieurs mesures pour réaliser les une ou plusieurs mesures des signaux de référence de liaison descendante reçus (1114).

6. Procédé selon la revendication 1, dans lequel les une ou plusieurs valeurs prédites (1112) pour une ou plusieurs mesures de signaux de référence de liaison descendante comprennent en outre une ou plusieurs valeurs de puissance reçue de signal de référence (RSRP) attendues pour les signaux de référence de liaison descendante (1114).

7. Procédé selon la revendication 1, dans lequel les une ou plusieurs valeurs prédites (1112) pour une ou plusieurs mesures de signaux de référence de liaison descendante comprennent en outre au moins une ou plusieurs valeurs de différence de temps de signal de référence (RSTD) attendues pour les signaux de référence de liaison descendante (1114) reçus à partir de la station de base par rapport à des signaux de référence de liaison descendante reçus à partir d'une ou plusieurs autres stations de base, et/ou une ou plusieurs incertitudes de RSTD attendues, et/ou une combinaison de celles-ci.

8. Procédé selon la revendication 1, dans lequel les une ou plusieurs valeurs prédites (1112) pour une ou plusieurs mesures de signaux de référence de liaison descendante comprennent en outre : une ou plusieurs valeurs d'angle d'arrivée (AoA) attendues pour les signaux de référence de liaison descendante, une ou plusieurs incertitudes d'aAoA attendues, ou une combinaison de celles-ci.

9. Procédé selon la revendication 1, dans lequel les une ou plusieurs valeurs prédites (1112) pour une ou plusieurs mesures de signaux de référence de liaison descendante comprennent en outre une ou plusieurs valeurs de temps d'aller-retour (RTT) attendues pour la station de base.

**10.** Procédé selon la revendication 1, comprenant en outre :

la réception d'un ou plusieurs coefficients de canal prédits pour des paires d'antennes Tx-Rx ou de ports d'antenne sur la base de mesures de signaux de référence de liaison descendante précédents reçus à partir de la station de base ; et

la détermination de coefficients de canal actuels à partir des signaux de référence de liaison descendante reçus ; dans lequel la détermination (1408) que le dispositif d'attaque (912) a émis ou non les signaux de référence de liaison descendante reçus (1114) est basée en outre sur les coefficients de canal prédits et les coefficients de canal actuels.

**11.** Equipement utilisateur (UE) configuré pour authentifier une connexion avec une station de base, comprenant :

un émetteur-récepteur sans fil configuré pour communiquer avec d'autres entités dans le réseau sans fil ;
au moins une mémoire ; et
au moins un processeur couplé à l'émetteur-récepteur sans fil et à l'au moins une mémoire et configuré pour :

recevoir (1402), à partir d'une entité de réseau (102, 172) au moyen de l'émetteur-récepteur sans fil, une ou plusieurs valeurs prédites (1112) pour une ou plusieurs mesures de signaux de référence de liaison descendante basées sur des mesures réalisées par l'UE de signaux de référence de liaison descendante précédents reçus à partir de la station de base (102), dans lequel les une ou plusieurs valeurs prédites comprennent une vélocité prévue de l'UE sur la base de mesures réalisées par l'UE de signaux de référence de liaison descendante précédents reçus à partir de la station de base ;
recevoir (1404) des signaux de référence de liaison descendante (1114) ;
réaliser (1406) une ou plusieurs mesures (1115) des signaux de référence de liaison descendante reçus comportant la détermination d'une vélocité actuelle de l'UE sur la base des signaux de référence de liaison descendante reçus ; et
déterminer (1408) qu'un dispositif d'attaque (912) a émis ou non les signaux de référence de liaison descendante reçus (1114) sur la base des une ou plusieurs valeurs prédites pour une ou plusieurs mesures de signaux de référence de liaison descendante et des une ou plusieurs mesures des signaux de référence de liaison descendante actuels, laquelle comporte la comparaison (1126) de la vélocité prédite de l'UE à la vélocité actuelle déterminée de l'UE.

**12.** UE selon la revendication 11, dans lequel l'au moins un processeur est configuré en outre pour :

recevoir, par l'intermédiaire de l'émetteur-récepteur sans fil, un ou plusieurs coefficients de canal prédits pour des paires d'antennes Tx-Rx ou de ports d'antenne sur la base de mesures des signaux de référence de liaison descendante précédents reçus à partir de la station de base ; et
déterminer des coefficients de canal actuels à partir des signaux de référence de liaison descendante reçus ; dans lequel l'au moins un processeur est configuré pour déterminer que le dispositif d'attaque a émis ou non les signaux de référence de liaison descendante reçus sur la base des coefficients de canal prédits et des coefficients de canal actuels.

**13.** UE selon la revendication 11, dans lequel l'au moins un processeur est configuré en outre pour recevoir un ou plusieurs horodatages associés aux valeurs prédites pour les une ou plusieurs mesures de signaux de référence de liaison descendante,

dans lequel la détermination qu'un dispositif d'attaque a émis ou non les signaux de référence de liaison descendante reçus comprend la détermination qu'une différence entre la vélocité prédite de l'UE et la vélocité actuelle déterminée de l'UE est en-deçà d'un seuil,
dans lequel le seuil est basé au moins en partie sur le temps écoulé entre un horodatage associé aux valeurs prédites et un temps de réception des signaux de référence de liaison descendante.

**14.** UE selon la revendication 11, dans lequel les signaux de référence de liaison descendante sont des signaux de référence de positionnement de liaison descendante.

**15.** UE selon la revendication 11, dans lequel l'au moins un processeur est configuré en outre pour envoyer un rapport (1128) à l'entité de réseau (102, 172) indiquant une présence du dispositif d'attaque (912) dans la connexion entre l'UE et la station de base (102) en réponse à une détermination que les signaux de référence de liaison descendante reçus sont émis par le dispositif d'attaque, dans lequel l'entité de réseau est la station de base (102) ou un serveur de localisation (172).

16. UE selon la revendication 11, dans lequel les une ou plusieurs valeurs prédites (1112) pour une ou plusieurs mesures de signaux de référence de liaison descendante comprennent en outre une ou plusieurs valeurs de puissance reçue de signal de référence (RSRP) attendues pour les signaux de référence de liaison descendante (1114).

**FIG. 1**

**FIG. 2**

**FIG. 3**

**FIG. 4**

EP 4 360 350 B1

FIG. 5

**FIG. 6**

**FIG. 7**

800 —

**FIG. 8A**

850 —

**FIG. 8B**

900

912

914 → Attacking Device

172 LS

102 BS

914

104 UE

902

904

**FIG. 9A**

950

960

Expected

970

Measured ● ● ●

t1    t2    t3    t4    t5

**FIG. 9B**

1000

1006

1002

1006

Measurement Expected RSTD Window

1004

Authentication Expected RSTD Window

**FIG. 10**

1100 ⌐

| Location Server 172 | Base Station 102 | Attacker 912 | UE 104 |
|---|---|---|---|

⌐1102
⌐1103
Send PRS → Measurements

⌐1104
← Measurement Values

⌐1106
⌐1107
Send PRS → Measurements

⌐1108
← Measurement Values

⌐1110
Predict Measurement Values

⌐1112
Predicted Measurement Values →

⌐1114
⌐1115
Send PRS → Measurements

⌐1116
Compare Predicted to Measured Values

⌐1118
← Measurement Values

⌐1120
Predict Measurement Values

⌐1122
Predicted Measurement Values →

⌐1124
⌐1125
Send PRS → Measurements

⌐1126
Compare Predicted to Measured Values

⌐1128
← Report Attack (Flag/Measurement Values)

**FIG. 11**

**FIG. 12**

1300

External Interface 1310

Connections(s) 1306

Medium
1320

1308

Predicted Values
1322

Report
1324

Measurement
1326

Processing
Unit(s)
1302

Memory
1304

**FIG. 13**

1400 ⟍

Receive one or more predicted values for one or more measurements of downlink reference signals based on measurements of previous downlink reference signals received from the base station ⟋⎯1402

Receive downlink reference signals ⟋⎯1404

Perform one or more measurements of the received downlink reference signals ⟋⎯1406

Determine whether an attacking device transmitted the received downlink reference signals based on the one or more predicted values for one or more measurements of downlink reference signals and the one or more measurements of the current downlink reference signals ⟋⎯1408

**FIG. 14**

1500 ⟍

Obtain one or more predicted values for one or more measurements of downlink reference signals to be performed by the UE based on previous measurements performed by the UE of downlink reference signals received by the UE from the base station ⌐1502

Send the one or more predicted values for the one or more measurements of downlink reference signals to the UE ⌐1504

Receive an indication of whether an attacking device is present in the connection between the UE and the base station based on one or more measurements performed by the UE for current downlink reference signals received by the UE and the one or more predicted values for the one or more measurements of downlink reference signals to the UE ⌐1506

**FIG. 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021094221 A1
- US 20210185536 A1